# EUROPEAN PATENT APPLICATION

(11) **EP 4 808 073 A1**
(43) Date of publication of application: **16.09.2026**
(21) Application number: 24896368.8
(22) Date of filing: 20.11.2024
(51) Int. Cl.: H04L 47/12

(54) **RATE ADJUSTMENT METHOD AND COMMUNICATION APPARATUS**

(30) Priority: 30.11.2023 CN 202311632497
(71) Applicant: Huawei Technologies Co., Ltd., Shenzhen, Guangdong 518129 (CN)
(72) Inventor: ZHU, Zheqi, Shenzhen, Guangdong 518129 (CN); ZENG, Qinghai, Shenzhen, Guangdong 518129 (CN); LI, Kuikui, Shenzhen, Guangdong 518129 (CN); LOU, Chong, Shenzhen, Guangdong 518129 (CN)
(74) Representative: Goddar, Heinz J.
(86) International application number: PCT/CN2024/133235
(87) International publication number: WO 2025/113277

(57) **Abstract**

A rate control method and a communication device, relating to the field of communications, which can reduce the task response time in a device-cloud collaborative architecture. The method comprises: receiving first information from an access network device, obtaining a first packet of a terminal device, and sending a second packet to an application server. The first information is used to indicate that a first QoS requirement corresponding to a first quality of service (QoS) flow needs to be adjusted to a second QoS requirement, wherein the first QoS requirement and the second QoS requirement correspond to different data transmission rates. The second packet carries second information, which is determined based on the first information, a first quantity of packets in the first packet that have experienced congestion, a first quantity of packets that have not experienced congestion, and a quantity of packets that do not support explicit congestion notification (ECN) feedback. The second information is used to determine a first congestion ratio when the first QoS flow is transmitted at the first QoS requirement, and the first congestion ratio is used to adjust the data transmission rate of the first QoS flow.

## Description

### CROSS-REFERENCE TO RELATED APPLICATIONS

This application claims priority to Chinese Patent Application No. 202311632497.4, filed with the China National Intellectual Property Administration on November 30, 2023, and entitled "Rate Control Method and Communication Device", which is incorporated herein by reference in its entirety.

### TECHNICAL FIELD

This application relates to the field of communications, and in particular, to a rate control method and a communication device.

### BACKGROUND

In the device-cloud collaborative service architecture, terminal devices and the cloud collaboratively complete computing tasks through interaction, such as video rendering services and deep neural network training/inference services, thereby achieving task division and data interaction and optimizing system efficiency. In this architecture, both the terminal device and the cloud participate in computing tasks, and there is information exchange between them. Accordingly, the response time required to complete a computing task-i.e., the time elapsed from task initiation to task completion-must be taken into account. To meet task response time requirements, it is generally necessary to consider the computing power status and wireless communication status of the terminal device and to adjust the transmission rate at the application layer on the cloud side based on changes in these statuses. However, how to ensure that the task response time in the device-cloud collaborative architecture meets the requirements has become an urgent problem to be solved.

### SUMMARY

Embodiments of this application provide a rate control method and a communication device, which can improve the response speed for completing computing tasks in a device-cloud collaborative architecture and reduce the task response time.

To achieve the foregoing objectives, this application adopts the following technical solutions:
According to a first aspect, a rate control method is provided. This method may be performed by a user plane network element, or may be performed by a component of the user plane network element, such as a processor, a chip, or a chip system of the user plane network element, or may be implemented by logical modules or software capable of implementing all or part of the functions of the user plane network element. The method comprises: receiving first information from an access network device, wherein the first information is used to indicate that a first QoS requirement corresponding to a first quality of service (QoS) flow needs to be adjusted to a second QoS requirement, and the first QoS requirement and the second QoS requirement correspond to different data transmission rates; obtaining a first packet of a terminal device, wherein the first packet comprises a first quantity of packets that have experienced congestion, a first quantity of packets that have not experienced congestion, and a quantity of packets that do not support explicit congestion notification (ECN) feedback; and sending a second packet to an application server, wherein the second packet carries second information, the second information is determined based on the first information, the first quantity of packets that have experienced congestion, the first quantity of packets that have not experienced congestion, and the quantity of packets that do not support ECN feedback, the second information is used to determine a first congestion ratio when the first QoS flow is transmitted at the first QoS requirement, and the first congestion ratio is used to adjust the data transmission rate of the first QoS flow.

Based on this rate control method, the user plane network element can learn in real time the latest network status changes and congestion conditions based on the QoS requirement change indicated by the first information sent by the access network device, and updates the ECN feedback information in the obtained first packet based on the first information to obtain the second information, which is then fed back to the application server via the second packet so that the application server can adjust the data transmission rate based on the second information. As a result, on one hand, the user plane network element does not need to obtain ECN feedback information by detouring through the terminal device via two air interfaces, and there is no interval for the terminal device to collect ECN feedback information, thereby improving the ECN feedback rate and reducing the task response time; on the other hand, the user plane network element feeds back, through the second packet, ECN feedback information adjusted based on the first information, so that the data transmission rate adjusted by the application server better matches the real-time network status, thereby also reducing the task response time.

In a possible design, the first information may comprise one of the following: a second congestion ratio when the first QoS flow is transmitted at the first QoS requirement, an identifier of the second QoS requirement, or a QoS parameter in the second QoS requirement, wherein the second congestion ratio is determined based on the first QoS requirement and the second QoS requirement. Accordingly, the user plane network element can learn in real time the latest network status changes based on the congestion ratio information, the identifier of the QoS requirement to be adjusted, or the QoS parameter in the QoS requirement to be adjusted, adjusts the obtained ECN feedback information of the terminal device in accordance with the network status changes, and feeds the adjusted information back to the application server, so that the data transmission rate adjusted by the application server better matches the real-time network status, thereby reducing the task response time. It should be understood that the QoS parameter in the second QoS requirement comprised in the first information may be one or more QoS parameters selected by the access network device from the second QoS requirement.

In a possible design, the QoS parameter may comprise at least one of the following: a guaranteed flow bit rate (GFBR), a packet delay budget (PDB), or a packet error rate (PER). It should be understood that, in addition to the foregoing three QoS parameters, the QoS requirement in the embodiments of this application may further comprise other QoS parameters used for feeding back network status.

In a possible design, the first information may be carried in a packet sent by the access network device. For example, the first information is carried in a packet header of a General Packet Radio Service Tunneling Protocol-User Plane (GTP-U) packet sent by the access network device.

In a possible design, the second information may comprise a second quantity of packets that have experienced congestion, a second quantity of packets that have not experienced congestion, and a quantity of packets that do not support ECN feedback; wherein the second quantity of packets that have experienced congestion is determined based on a total counted quantity of packets and the first information, the second quantity of packets that have not experienced congestion is determined based on the total counted quantity of packets, the second quantity of packets that have experienced congestion, and the quantity of packets that do not support ECN feedback, and the total counted quantity of packets equals the sum of the first quantity of packets that have experienced congestion, the first quantity of packets that have not experienced congestion, and the quantity of packets that do not support ECN feedback. Accordingly, the user plane network element can update the quantity of packets that have experienced congestion and the quantity of packets that have not experienced congestion based on the ECN feedback information in the obtained first packet and the first information, so that the ECN feedback information fed back to the application server better matches the real-time network status changes, thereby reducing the task response time.

In a possible design, the determination of the second quantity of packets that have experienced congestion based on the total counted quantity of packets and the first information may comprise: determining the second quantity of packets that have experienced congestion based on the total counted quantity of packets and a second congestion ratio when the first QoS flow is transmitted at the first QoS requirement, wherein the second congestion ratio is determined based on the first information. Accordingly, the user plane network element can determine the second congestion ratio based on the first information, and adjust the quantity of packets that have experienced congestion based on the second congestion ratio and the ECN feedback information in the first packet, so that the ECN feedback information fed back to the application server better matches the real-time network status changes, thereby improving the reduction of response time.

In a possible design, the second quantity of packets that have not experienced congestion is the maximum of a third quantity and zero, wherein the third quantity equals the difference obtained by subtracting the second quantity of packets that have experienced congestion and the quantity of packets that do not support ECN feedback from the total counted quantity of packets. Accordingly, the user plane network element adjusts the quantity of packets that have not experienced congestion based on the adjusted quantity of packets that have experienced congestion, thereby ensuring that the data transmission rate adjusted by the application server matches the real-time network status changes.

In a possible design, the second packet may be obtained by modifying the first quantity of packets that have experienced congestion in the first packet to the second quantity of packets that have experienced congestion, and modifying the first quantity of packets that have not experienced congestion in the first packet to the second quantity of packets that have not experienced congestion. For example, the first packet is an RTPFB (real-time transport layer feedback message) packet that supports ECN feedback and is being sent by the terminal device, and the user plane network element modifies the quantity of packets that have experienced congestion and the quantity of packets that have not experienced congestion in the received first packet to obtain the second packet. As a result, by reusing the RTCP transmission scheme of L4S, the application server can adjust the transmission rate without requiring dedicated adaptation, thereby improving the compatibility of dynamic QoS-based rate control with existing devices and facilitating evolution toward a system that supports dynamic QoS.

In a possible design, the payload of the second packet is empty, the sequence number of the second packet is one greater than the sequence number of the first packet, the sender identifier and the receiver identifier in the second packet are respectively the same as the sender identifier and the receiver identifier in the first packet, the sender identifier identifies the terminal device, and the receiver identifier identifies the application server. For example, the user plane network element may locally generate a series of RTPFB packets that support ECN feedback and are continuous with the packets transmitted by the terminal device, reusing the RTCP transmission scheme of L4S, so that the application server can adjust the transmission rate without requiring dedicated adaptation, thereby improving the compatibility of dynamic QoS-based rate control with existing devices and facilitating evolution toward a system that supports dynamic QoS.

In a possible design, the second packet may be an RTPFB packet or a QUIC (quick UDP internet connections) ACK packet.

According to a second aspect, a rate control method is provided. This method may be performed by an access network device, or may be performed by a component of the access network device, such as a processor, a chip, or a chip system of the access network device, or may be implemented by logical modules or software capable of implementing all or part of the functions of the access network device. The method comprises: determining that a first QoS requirement corresponding to a first QoS flow needs to be adjusted to a second QoS requirement, wherein the first QoS requirement and the second QoS requirement correspond to different data transmission rates; and sending first information to a user plane network element, wherein the first information is used to indicate that the first QoS requirement needs to be adjusted to the second QoS requirement.

In a possible design, the determining that the first QoS requirement corresponding to the first QoS flow needs to be adjusted to the second QoS requirement may comprise: determining, based on the channel state, the air interface transmission condition of the first QoS flow, and the first QoS requirement corresponding to the first QoS flow, that the first QoS requirement needs to be adjusted to the second QoS requirement.

In a possible design, the first information may comprise one of the following: a second congestion ratio when the first QoS flow is transmitted at the first QoS requirement, an identifier of the second QoS requirement, or a QoS parameter in the second QoS requirement, wherein the second congestion ratio is determined based on the first QoS requirement and the second QoS requirement.

In a possible design, the QoS parameter may comprise at least one of the following: a guaranteed flow bit rate (GFBR), a packet delay budget (PDB), or a packet error rate (PER).

In a possible design, the first information may be carried in a packet sent by the access network device.

In a possible design, the rate control method provided in the embodiments of this application may further comprise: receiving third information from an application server, wherein the third information is used to indicate a third QoS requirement, and the third QoS requirement is the QoS requirement corresponding to the data transmission rate of the first QoS flow as adjusted by the application server.

The technical effects of the method according to the second aspect may be understood by reference to the technical effects described in the method according to the first aspect, and are not repeated herein.

According to a third aspect, a rate control method is provided. This method may be performed by an application server, or may be performed by a component of the application server, such as a processor, a chip, or a chip system of the application server, or may be implemented by logical modules or software capable of implementing all or part of the functions of the application server. The method comprises: receiving a second packet from a user plane network element, wherein the second packet carries second information, and the second information is used to determine a first congestion ratio when the first QoS flow is transmitted at the first QoS requirement; and adjusting the data transmission rate of the first QoS flow based on the second information.

In a possible design, the adjusting the data transmission rate of the first QoS flow based on the second information may comprise: determining a third QoS requirement based on the second information and the first QoS requirement corresponding to the first QoS flow, wherein the first QoS requirement and the third QoS requirement correspond to different data transmission rates; and adjusting the data transmission rate of the first QoS flow according to the third QoS requirement.

In a possible design, the rate control method provided in the embodiments of this application may further comprise: sending third information to an access network device, wherein the third information is used to indicate a third QoS requirement.

In a possible design, the second information may comprise a second quantity of packets that have experienced congestion, a second quantity of packets that have not experienced congestion, and a quantity of packets that do not support ECN feedback.

In a possible design, the payload of the second packet is empty.

The technical effects of the method according to the third aspect may be understood by reference to the technical effects described in the method according to the first aspect, and are not repeated herein.

According to a fourth aspect, a communication device is provided for implementing the various methods described above. The communication device may be the user plane network element in the first aspect, or a device comprising the user plane network element, or a device comprised in the user plane network element, such as a chip. The communication device comprises corresponding modules, units, or means for implementing the method according to the first aspect, which may be implemented by hardware, by software, or by hardware executing corresponding software. The hardware or software comprises one or more modules or units corresponding to the foregoing functions.

In some possible designs, the communication device comprises a processing module and a transceiver module. The transceiver module receives first information from an access network device, wherein the first information is used to indicate that a first QoS requirement corresponding to a first QoS flow needs to be adjusted to a second QoS requirement, and the first QoS requirement and the second QoS requirement correspond to different data transmission rates. The processing module is configured to obtain a first packet of a terminal device, wherein the first packet comprises a first quantity of packets that have experienced congestion, a first quantity of packets that have not experienced congestion, and a quantity of packets that do not support ECN feedback. The transceiver module is further configured to send a second packet to an application server, wherein the second packet carries second information, the second information is determined based on the first information, the first quantity of packets that have experienced congestion, the first quantity of packets that have not experienced congestion, and the quantity of packets that do not support ECN feedback, the second information is used to determine a first congestion ratio when the first QoS flow is transmitted at the first QoS requirement, and the first congestion ratio is used to adjust the data transmission rate of the first QoS flow.

In a possible design, the first information may comprise one of the following: a second congestion ratio when the first QoS flow is transmitted at the first QoS requirement, an identifier of the second QoS requirement, or a QoS parameter in the second QoS requirement, wherein the second congestion ratio is determined based on the first QoS requirement and the second QoS requirement.

In a possible design, the QoS parameter may comprise at least one of the following: a guaranteed flow bit rate (GFBR), a packet delay budget (PDB), or a packet error rate (PER).

In a possible design, the first information may be carried in a packet sent by the access network device.

In a possible design, the second information may comprise a second quantity of packets that have experienced congestion, a second quantity of packets that have not experienced congestion, and a quantity of packets that do not support ECN feedback; wherein the second quantity of packets that have experienced congestion is determined based on the total counted quantity of packets and the first information, the second quantity of packets that have not experienced congestion is determined based on the total counted quantity of packets, the second quantity of packets that have experienced congestion, and the quantity of packets that do not support ECN feedback, and the total counted quantity of packets equals the sum of the first quantity of packets that have experienced congestion, the first quantity of packets that have not experienced congestion, and the quantity of packets that do not support ECN feedback.

In a possible design, the determination of the second quantity of packets that have experienced congestion based on the total counted quantity of packets and the first information may comprise: determining the second quantity of packets that have experienced congestion based on the total counted quantity of packets and a second congestion ratio when the first QoS flow is transmitted at the first QoS requirement, wherein the second congestion ratio is determined based on the first information.

In a possible design, the second quantity of packets that have not experienced congestion is the maximum of a third quantity and zero, wherein the third quantity equals the difference obtained by subtracting the second quantity of packets that have experienced congestion and the quantity of packets that do not support ECN feedback from the total counted quantity of packets.

In a possible design, the second packet may be obtained by modifying the first quantity of packets that have experienced congestion in the first packet to the second quantity of packets that have experienced congestion, and modifying the first quantity of packets that have not experienced congestion in the first packet to the second quantity of packets that have not experienced congestion.

In a possible design, the payload of the second packet is empty, the sequence number of the second packet is one greater than the sequence number of the first packet, the sender identifier and the receiver identifier in the second packet are respectively the same as the sender identifier and the receiver identifier in the first packet, the sender identifier identifies the terminal device, and the receiver identifier identifies the application server.

In a possible design, the second packet may be an RTPFB packet.

In a possible design, the transceiver module may comprise a receiving module and a sending module, wherein the sending module is configured to implement the sending function of the communication device according to the first aspect, and the receiving module is configured to implement the receiving function of the communication device according to the first aspect.

In a possible design, the communication device according to the fourth aspect may further comprise a storage module that stores a program or instructions. When the processing module executes the program or instructions, the communication device according to the fourth aspect is enabled to perform the method according to the first aspect.

According to a fifth aspect, a communication device is provided for implementing the various methods described above. The communication device may be the access network device in the second aspect, or a device comprising the access network device, or a device comprised in the access network device, such as a chip. The communication device comprises corresponding modules, units, or means for implementing the method according to the second aspect, which may be implemented by hardware, by software, or by hardware executing corresponding software. The hardware or software comprises one or more modules or units corresponding to the foregoing functions.

In some possible designs, the communication device comprises a processing module and a transceiver module. The processing module is configured to determine that a first QoS requirement corresponding to a first QoS flow needs to be adjusted to a second QoS requirement, wherein the first QoS requirement and the second QoS requirement correspond to different data transmission rates. The transceiver module is configured to send first information to a user plane network element, wherein the first information is used to indicate that the first QoS requirement needs to be adjusted to the second QoS requirement.

In a possible design, the processing module is configured to determine that the first QoS requirement corresponding to the first QoS flow needs to be adjusted to the second QoS requirement, specifically: the processing module is configured to determine, based on the channel state, the air interface transmission condition of the first QoS flow, and the first QoS requirement corresponding to the first QoS flow, that the first QoS requirement needs to be adjusted to the second QoS requirement.

In a possible design, the first information may comprise one of the following: a second congestion ratio when the first QoS flow is transmitted at the first QoS requirement, an identifier of the second QoS requirement, or a QoS parameter in the second QoS requirement, wherein the second congestion ratio is determined based on the first QoS requirement and the second QoS requirement.

In a possible design, the QoS parameter may comprise at least one of the following: a guaranteed flow bit rate (GFBR), a packet delay budget (PDB), or a packet error rate (PER).

In a possible design, the first information may be carried in a packet sent by the access network device.

In a possible design, the transceiver module is further configured to receive third information from an application server, wherein the third information is used to indicate a third QoS requirement, and the third QoS requirement is the QoS requirement corresponding to the data transmission rate of the first QoS flow as adjusted by the application server.

According to a sixth aspect, a communication device is provided for implementing the various methods described above. The communication device may be the application server in the third aspect, or a device comprising the application server, or a device comprised in the application server, such as a chip. The communication device comprises corresponding modules, units, or means for implementing the method according to the third aspect, which may be implemented by hardware, by software, or by hardware executing corresponding software. The hardware or software comprises one or more modules or units corresponding to the foregoing functions.

In some possible designs, the communication device comprises a processing module and a transceiver module. The transceiver module is configured to receive a second packet from a user plane network element, wherein the second packet carries second information, and the second information is used to determine a first congestion ratio when the first QoS flow is transmitted at the first QoS requirement. The processing module is configured to adjust the data transmission rate of the first QoS flow based on the second information.

In a possible design, the processing module is configured to adjust the data transmission rate of the first QoS flow based on the second information, specifically: the processing module is configured to determine a third QoS requirement based on the second information and the first QoS requirement corresponding to the first QoS flow, wherein the first QoS requirement and the third QoS requirement correspond to different data transmission rates; and the processing module is further configured to adjust the data transmission rate of the first QoS flow according to the third QoS requirement.

In a possible design, the transceiver module is further configured to send third information to an access network device, wherein the third information is used to indicate a third QoS requirement.

In a possible design, the second information may comprise a second quantity of packets that have experienced congestion, a second quantity of packets that have not experienced congestion, and a quantity of packets that do not support ECN feedback.

In a possible design, the payload of the second packet is empty.

According to a seventh aspect, a rate control method is provided, comprising: an access network device sending first information to a user plane network element, wherein the first information is used to indicate that a first QoS requirement corresponding to a first QoS flow needs to be adjusted to a second QoS requirement, and the first QoS requirement and the second QoS requirement correspond to different data transmission rates; the user plane network element receiving the first information from the access network device and obtaining a first packet of a terminal device, wherein the first packet comprises a first quantity of packets that have experienced congestion, a first quantity of packets that have not experienced congestion, and a quantity of packets that do not support ECN feedback; and the user plane network element sending a second packet to an application server, wherein the second packet carries second information, the second information is determined based on the first information, the first quantity of packets that have experienced congestion, the first quantity of packets that have not experienced congestion, and the quantity of packets that do not support ECN feedback, the second information is used to determine a first congestion ratio when the first QoS flow is transmitted at the first QoS requirement, and the first congestion ratio is used to adjust the data transmission rate of the first QoS flow.

According to an eighth aspect, a communication device (which may be, for example, a chip or a chip system) is provided, comprising: a processor configured to implement the functions involved in the first aspect, the second aspect, or the third aspect.

In a possible design, the communication device may further comprise a memory configured to store necessary program instructions and data. The processor is coupled to the memory and is configured to execute the computer program or instructions stored in the memory, so that the communication device performs the method according to the first aspect, the second aspect, or the third aspect.

In a possible design, the communication device according to the eighth aspect may further comprise a transceiver. The transceiver may be a transceiver circuit or an interface circuit, and may be used to enable the communication device according to the eighth aspect to communicate with another communication device.

In a possible design, the processor may be integrated with the memory.

In some possible designs, when the device is a chip system, it may be constituted by a chip, or may comprise a chip and other discrete components.

According to a ninth aspect, a communication device is provided, comprising a processor and an interface circuit. The interface circuit is configured to receive signals from other communication devices external to the communication device and transmit the signals to the processor, or to send signals from the processor to other communication devices external to the communication device. The processor is configured to implement the method according to the first aspect, the second aspect, or the third aspect by means of logic circuits or executable code instructions.

According to a tenth aspect, a communication device is provided. The communication device may be a user plane network element, or may be a module or unit in the user plane network element that is in one-to-one correspondence with and performs the method/operation/step/action described in the first aspect (e.g., a chip, a chip system, or a circuit), or may be usable in conjunction with an access network device. Alternatively, the communication device may be an access network device, or may be a module or unit in the access network device that is in one-to-one correspondence with and performs the method/operation/step/action described in the second aspect (e.g., a chip, a chip system, or a circuit), or may be usable in conjunction with an access network device. Alternatively, the communication device may be an application server, or may be a module or unit in the application server that is in one-to-one correspondence with and performs the method/operation/step/action described in the third aspect (e.g., a chip, a chip system, or a circuit), or may be usable in conjunction with an access network device.

It should be understood that when the communication device provided in any one of the eighth aspect or the tenth aspect is a chip, the foregoing sending action/function may be understood as an output, and the foregoing receiving action/function may be understood as an input.

According to an eleventh aspect, a computer-readable storage medium is provided, wherein the storage medium stores a computer program or instructions, and when the computer program or instructions are executed on a communication device, the communication device is enabled to perform the method according to the first aspect, the second aspect, or the third aspect.

According to a twelfth aspect, a computer program product comprising computer program code is provided, wherein when the computer program code is run on a communication device, the communication device is enabled to perform the method according to the first aspect, the second aspect, or the third aspect.

According to a thirteenth aspect, a communication system is provided, comprising: a communication device configured to implement the method according to the first aspect, a communication device configured to implement the method according to the second aspect, and a communication device configured to implement the method according to the third aspect.

### BRIEF DESCRIPTION OF DRAWINGS

FIG. 1 is a system architecture diagram illustrating video rendering in pure cloud mode and in device-cloud collaborative mode;
FIG. 2 is a schematic architectural diagram of an L4S rate control mechanism;
FIG. 3 is a schematic architectural diagram of a dynamic QoS-based rate control mechanism;
FIG. 4 is a schematic architectural diagram of a communication system according to an embodiment of this application;
FIG. 5 is a schematic flowchart of a rate control method according to an embodiment of this application;
FIG. 6 is a schematic structural diagram of an RTPFB packet that supports ECN feedback according to an embodiment of this application;
FIG. 7 is a schematic flowchart of another rate control method according to an embodiment of this application;
FIG. 8 is a schematic flowchart of yet another rate control method according to an embodiment of this application;
FIG. 9 is a schematic structural diagram of a communication device according to an embodiment of this application;
FIG. 10 is a schematic structural diagram of another communication device according to an embodiment of this application.

### DESCRIPTION OF EMBODIMENTS

Embodiments of this application will be presented in terms of systems that may include a plurality of devices, components, modules, and the like. It should be understood and appreciated that each system may include other devices, components, modules, and the like, and/or may not include all devices, components, modules, and the like discussed with reference to the accompanying drawings. In addition, combinations of these solutions may also be used.

The technical solutions in the embodiments of this application may be applied to various communication systems, for example: a wireless fidelity (Wi-Fi) system, a vehicle to everything (V2X) communication system, a device-to-device (D2D) communication system, an internet of vehicles communication system, a 4th generation (4G) mobile communication system such as a long term evolution (LTE) system, a worldwide interoperability for microwave access (WiMAX) communication system, a 5th generation (5G) mobile communication system such as a new radio (NR) system, and future communication systems such as a 6th generation (6G) mobile communication system.

The communication systems and applicable network elements involved in the embodiments of this application, as well as related terms, are introduced below.

### 1. Device-Cloud Collaboration

With the continuous evolution of communication networks, the improvement of computing performance of terminal devices, and the development of machine learning algorithms, terminal devices are increasingly participating in services previously handled by servers, such as cloud gaming and machine vision, which are computationally intensive tasks. The processing model has progressively evolved from centralized cloud processing to a collaborative model involving both terminal devices and the cloud (central cloud or edge cloud). This has given rise to the device-cloud collaborative service architecture.

The device-cloud collaborative service architecture is primarily applied to video rendering services and deep neural network services. The typical applications of video rendering services include virtual reality (VR), augmented reality (AR), and cloud gaming. On one hand, these emerging video rendering services have high requirements for computing power. For example, at a resolution of 4K and a frame rate of 60 frames per second (FPS), the computing power required for device-side video rendering is 13+ tera floating-point operations per second (TFLOPS), whereas the computing power of current mainstream terminal devices is only around 1.3 TFLOPS, making it difficult to meet the computing power demands of these video rendering services through local processing on the terminal device alone. Additionally, terminal devices are constrained by power consumption and cannot support prolonged high-computing-power operations. On the other hand, although the cloud side has powerful computing capabilities, these video rendering services have stringent real-time interaction requirements: the process from an operation command or pose information being sent from the terminal device to the cloud for video rendering, to the rendered result being sent back to the terminal device, to the final display on the terminal device's screen-known as motion-to-photons (MTP) latency-must be completed within 50 ms. Under mobile networks, the fluctuating quality of wireless channel communication makes it difficult for pure cloud-side video rendering to meet this MTP latency requirement. Therefore, it is necessary to make full use of the computing power on the terminal device side and the communication link between the device and the cloud to achieve task division and interaction, thereby optimizing system efficiency.

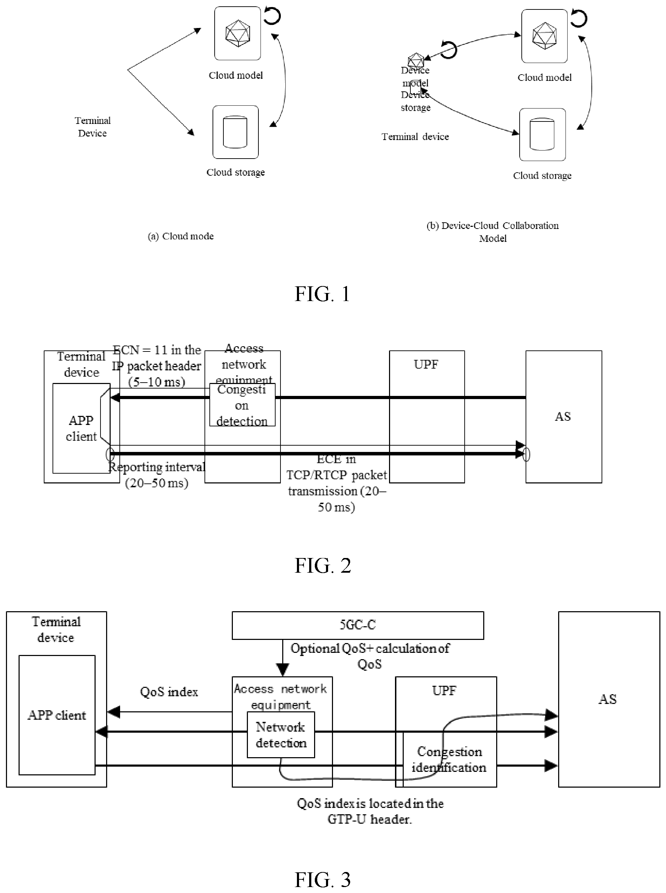

As shown in FIG. 1, (a) illustrates the system architecture of video rendering in pure cloud mode, while (b) illustrates the system architecture of joint video rendering in device-cloud collaborative mode. By comparison, it can be seen that in device-cloud collaborative mode, the terminal device uses local storage and algorithm models to perform some video rendering tasks, while tasks for which local computing power is insufficient or cannot be processed quickly locally are transmitted to the cloud for processing by a highly powerful computing cluster, and the rendered data stream is then sent back to the terminal device. In this way, both the terminal device and the cloud participate in the computing tasks and exchange information through the communication link between them, thereby realizing joint processing of the computing tasks.

In addition, with the emergence of large language models (LLMs) and artificial intelligence (AI) generative models represented by the Chat Generative Pre-trained Transformer (ChatGPT), significant attention has been paid to how to provide services that enable terminal devices to access the capabilities of large models. One of the most intuitive approaches is to deploy small models on the device side for collaborative learning with large models on the cloud side. The connection between device-side and cloud-side models is similar to the architecture illustrated in (b) of FIG. 1, where the small and large models on the device and cloud sides are assigned to different tasks, and joint training and inference are achieved through the interaction of intermediate data or models, thereby realizing intelligent services through device-cloud collaboration.

In device-cloud collaborative mode, the key metric of focus is the task response time, which refers to the total time from task initiation to completion, encompassing the combined time consumed by device-cloud computation and data transmission. To meet the response time requirements of computing tasks, it is necessary to consider the computing power status and wireless communication status on the terminal device side, and to adjust task allocation or transmission rates at the application layer based on changes in these statuses. In particular, due to the time-varying and highly fluctuating nature of wireless channels, timely detection of changes in wireless communication status and notification to the application layer are crucial for ensuring the timely completion of computing tasks. To this end, the following two mechanisms have been proposed for adjusting transmission rates to meet the response time requirements of computing tasks.

### 2. Low Latency, Low Loss, Scalable Throughput (L4S) Rate Control Mechanism

L4S, as a rate control mechanism suitable for device-cloud collaboration, benefits from strong ecosystem support. It achieves congestion control and adjusts the transmission rate of application servers (AS) through explicit congestion notification (ECN).

For example, FIG. 2 is a schematic architectural diagram of an L4S rate control mechanism. As shown in FIG. 2, an access network device performs congestion detection on downlink internet protocol (IP) packets delivered by the AS through a user plane function (UPF). The header of an IP packet comprises an ECN field, which has four state values: 00 indicates that ECN transmission is not supported, marked as not-ECT (not ECN-capable transport); 10 indicates that ECN transmission is supported, marked as ECT(0); 01 indicates that ECN transmission is supported, marked as ECT(1); and 11 indicates that congestion has occurred, marked as congestion experienced (CE). When the access network device detects a congestion state, it marks the downlink IP packets in the congestion state as CE, so that the terminal device can count the received downlink IP packets with the CE label and feed back congestion information through the ECN-Echo (ECE) field in the header of an uplink transport control protocol (TCP) acknowledgment (ACK) packet or a real-time transport control protocol (RTCP) packet. The ECE field is used for congestion control: when the ECN field in the header of a received IP packet is 1, the ECE field is set to 1, indicating that there is congestion in the network from the peer to this end. The AS then adjusts the application-layer transmission rate based on the received congestion information, completing the entire rate control process.

However, the foregoing L4S-based rate control mechanism has certain deficiencies in response speed and accuracy of feedback information. Specifically, in terms of response speed, congestion information generated at the access network device needs to undergo two air interface transmissions before being fed back to the AS, and the reporting interval used by the terminal device to collect congestion information is usually greater than 20 ms, which slows down the response speed. In terms of feedback information, the granularity of the fed-back congestion information is relatively coarse, making it difficult for the AS to accurately determine the network status from the fed-back congestion information. Moreover, the AS typically makes rate adjustment decisions based on multiple congestion feedback reports, which introduces accumulated decision delay. This not only leads to inaccurate rate adjustment but also slows down the response speed.

To address the foregoing problems, a dynamic quality of service (QoS) rate control mechanism has been further proposed, as described below.

### 3. Dynamic QoS-Based Rate Control Mechanism

FIG. 3 is a schematic architectural diagram of a dynamic QoS-based rate control mechanism. In the initial configuration phase, the AS, the 5G core network (5GC) control plane (C), and the access network device perform QoS configuration negotiation, so that the access network device can obtain multiple QoS configurations (QoS profiles) corresponding to the application, with one QoS profile configured as the initial QoS profile; different QoS profiles correspond to different transmission delay or transmission bandwidth requirements. In the rate control phase, the access network device performs congestion detection on downlink IP packets and determines whether a QoS profile needs to be switched. When a switch is needed, the access network device feeds back to the UPF, via the N3 interface between the access network device and the UPF, the index or guaranteed flow bit rate (GFBR) corresponding to the new QoS profile. Specifically, the access network device carries the index or GFBR corresponding to the new QoS profile in the header of an uplink general packet radio service (GPRS) tunneling protocol-user plane (GTP-U) packet and sends it to the UPF. Upon receiving the uplink GTP-U packet carrying the index or GFBR corresponding to the new QoS profile, the UPF feeds back the index or GFBR corresponding to the new QoS profile to the AS via an application programming interface (API) or by piggybacking on the user plane. The AS then adjusts the application-layer transmission rate based on the received index or GFBR, completing the entire rate control process.

The foregoing dynamic QoS-based rate control mechanism reduces the delay of the feedback path detouring through the terminal device, the delay of waiting for a report from the terminal device, and the accumulated decision delay of the AS, thereby enabling a faster response speed for rate control and a more explicit adjustment objective for the feedback. However, although the dynamic QoS-based rate control solution largely resolves the problems of feedback path detouring, non-immediacy of feedback, and non-immediacy of decision-making present in L4S rate control, the current standard does not support feeding back QoS index or GFBR to the AS, and cross-vendor implementation is difficult- i.e., there is an ecosystem problem.

To this end, in order to resolve the problems of the foregoing two rate control mechanisms, the embodiments of this application provide a rate control method that not only improves response speed and rate control accuracy, but also has good ecosystem support.

In order to better understand the embodiments of this application, the following explanations are made before introducing the embodiments.

First, in the embodiments of this application, "used to indicate" may include used to directly indicate and used to indirectly indicate. When a piece of "indication information" is described as being used to indicate A, this may include that the indication information directly indicates A or indirectly indicates A, and does not necessarily mean that A is carried in the indication information.

The information indicated by indication information is referred to as information to be indicated. In specific implementations, there are many ways to indicate information to be indicated, for example but not limited to: directly indicating the information to be indicated, such as the information to be indicated itself or an index thereof; indirectly indicating the information to be indicated by indicating other information that has an association relationship with the information to be indicated; or indicating only part of the information to be indicated, where the remaining part is already known or agreed upon in advance. For example, the indication of specific information may also be achieved by means of a pre-agreed arrangement order (e.g., specified by a protocol), thereby reducing indication overhead to some extent. Additionally, it is possible to identify the common parts of various pieces of information and indicate them collectively, so as to reduce the indication overhead caused by indicating the same information separately.

Furthermore, the specific indication manner may also be one of the existing various indication manners, for example but not limited to the foregoing indication manners and various combinations thereof. The specific details of various indication manners may be found in the prior art and are not elaborated herein. As may be understood from the foregoing, for example, when multiple pieces of information of the same type need to be indicated, different pieces of information may use different indication manners. In specific implementations, the required indication manner may be selected based on specific needs. The embodiments of this application do not limit the selected indication manner, and accordingly the indication manners involved in the embodiments of this application should be understood as encompassing all methods capable of enabling the party to be indicated to learn the information to be indicated.

The information to be indicated may be sent as a whole or may be split into multiple sub-pieces of information and sent separately, and the sending periods and/or sending timings of these sub-pieces of information may be the same or different. The specific sending method is not limited by this application. The sending periods and/or sending timings of these sub-pieces of information may be predefined (e.g., predefined according to a protocol), or may be configured by the transmitting-end device by sending configuration information to the receiving-end device. The configuration information may include, for example but not limited to, one of or a combination of at least two of: radio resource control (RRC) signaling, MAC-layer signaling (e.g., MAC-CE), and physical (PHY) layer signaling (e.g., downlink control information (DCI)).

Second, in the embodiments of this application, ordinal numerals such as "first" and "second" and various numerical identifiers are used merely for descriptive convenience and distinction, and are not intended to limit the scope of the embodiments of this application-for example, to distinguish different pieces of indication information, or to distinguish different areas. The ordinal numerals "first", "second", and the like do not imply a specific order, and persons skilled in the art understand that these terms do not limit quantity or execution order, nor do they imply that the items so designated are necessarily different.

Third, in the embodiments of this application, expressions such as "when", "in the case that", "if", and "should" indicate that a device (e.g., a terminal device or an access network device) will perform corresponding processing under a certain objective condition; they do not impose a time limit, do not require the device to perform a judgment action in an implementation, and do not imply other limitations.

Meanwhile, in the embodiments of this application, the words "exemplary" or "for example" are used to indicate an example, instance, or illustration. Any embodiment or design described as "exemplary" or "for example" in the embodiments of this application should not be construed as being preferred or more advantageous over other embodiments or designs. Rather, the use of "exemplary" or "for example" is intended to present related concepts in a specific manner for ease of understanding.

Finally, the network architecture and service scenarios described in the embodiments of this application are intended to more clearly explain the technical solutions of the embodiments of this application and do not constitute a limitation on the technical solutions provided by the embodiments of this application. Persons of ordinary skill in the art will appreciate that, with the evolution of network architectures and the emergence of new service scenarios, the technical solutions provided in the embodiments of this application are also applicable to similar technical problems.

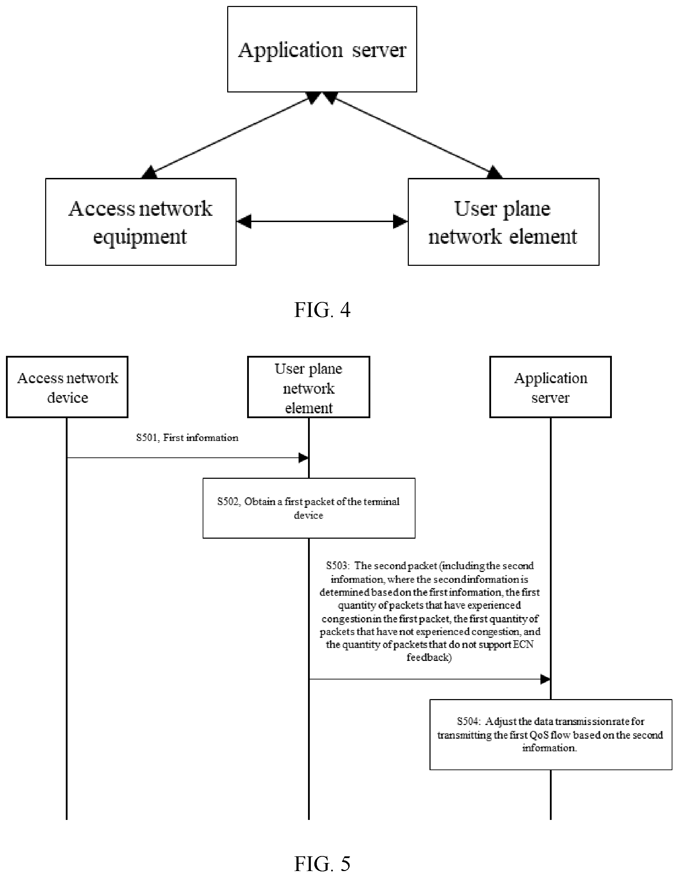

Referring to FIG. 4, FIG. 4 is a schematic architectural diagram of a communication system to which the embodiments of this application are applied. As an example, as shown in FIG. 4, the communication system comprises an access network device, a user plane network element, and an application server; any two of these may communicate directly or indirectly.

Optionally, the communication system may further comprise a terminal device. In the embodiments of this application, a terminal device may achieve device-cloud collaborative processing via the access network device, the user plane network element, and the application server. The application server may provide applications that require device-cloud collaboration, such as instant video rendering (extended reality (XR)/cloud gaming) or device-cloud joint AI model training/inference, and the like. The terminal device may, based on local data and using its own computing capability, complete processing of some tasks, while the remaining tasks or tasks requiring higher computing capability are handed over to the application server on the cloud side. The application server transmits the processed tasks back to the terminal device via downlink, thereby realizing device-cloud collaborative processing. The devices or network elements participating in device-cloud collaborative processing are described separately below.

### 1. Terminal Device

There may be one or more terminal devices, such as a first terminal device, a second terminal device, a third terminal device, and so on. A terminal device may be a terminal device having a transceiving function, or may be a chip or chip system provided in such a terminal device. The terminal device may also be referred to as user equipment (UE), an access terminal, a subscriber unit, a subscriber station, a mobile station (MS), a mobile console, a remote station, a remote terminal, a mobile device, a user terminal, a terminal, a wireless communication device, a user agent, or a user apparatus. Terminal devices in the embodiments of this application may include mobile phones, cellular phones, smart phones, tablet computers (Pads), wireless data cards, personal digital assistants (PDAs), wireless modems, handsets, laptop computers, machine type communication (MTC) terminals, computers with wireless transceiving functions, virtual reality (VR) terminals, augmented reality (AR) terminals, smart home devices (e.g., refrigerators, televisions, air conditioners, electricity meters), smart robots, robotic arms, workshop equipment, wireless terminals in autonomous driving, wireless terminals in industrial control, wireless terminals in self-driving, wireless terminals in remote medical care, wireless terminals in smart grids, wireless terminals in transportation safety, wireless terminals in smart cities, wireless terminals in smart homes, in-vehicle terminals, roadside units (RSUs) having terminal functions, flying devices (e.g., intelligent robots, hot air balloons, unmanned aerial vehicles, aircraft), and the like. Terminal devices in this application may also be vehicle-mounted modules, vehicle-mounted modules, vehicle-mounted components, vehicle-mounted chips, or vehicle-mounted units built into a vehicle as one or more components or units. Terminal devices may also be other devices having terminal functions, such as devices serving as terminals in D2D communication.

The embodiments of this application do not limit the form factor of the terminal device. A device for implementing the functions of the terminal device may be a terminal device, or may be a device capable of supporting the terminal device in implementing that function, such as a chip system. Such a device may be installed in or used in conjunction with the terminal device. In the embodiments of this application, a chip system may be constituted by a chip, or may comprise a chip and other discrete components.

### 2. Access Network Device

There may be one or more access network devices, such as a first access network device, a second access network device, a third access network device, and so on. An access network device may also be referred to as an access network node, a radio access network (RAN) node, a RAN entity, or an access node, and the like. It is located on the network side of the foregoing communication system, assists terminal devices in achieving wireless access, and is a device having a wireless transceiving function or a chip or chip system that may be provided in such a device. Access network devices include but are not limited to: base stations, evolved NodeBs (eNodeBs), access points (APs), transmission reception points (TRPs or TPs), next generation NodeBs (gNBs), next-generation base stations in 6G mobile communication systems, base stations in future mobile communication systems, access nodes in Wi-Fi systems, and the like. An access network device may be a macro base station, a micro base station, or an indoor station, a relay node or donor node, a radio controller in an open radio access network (O-RAN) or centralized radio access network (C-RAN) scenario. An access network device may also be one or a group (including multiple antenna panels) of antenna panels of a base station in 5G, or may be network nodes constituting a gNB, TRP, TP, or transmission measurement function (TMF), such as a central unit (CU), a distributed unit (DU), CU-control plane (CU-CP), CU-user plane (CU-UP), or a radio unit (RU), or a roadside unit (RSU) having base station functions. Optionally, an access network device may also be a server, a wearable device, a vehicle, or a vehicle-mounted device, and the like. For example, in V2X technology, the access network device may be an RSU. All or part of the functions of the network device in this application may also be implemented by software functions running on hardware, or by virtualized functions instantiated on a platform (e.g., a cloud platform). The access network device in this application may also be a logical node, a logical module, or software capable of implementing all or part of the functions of an access network device.

A CU and a DU may be separately arranged, or may be comprised in the same network element, such as a baseband unit (BBU). An RU may be comprised in a radio device or radio unit, for example in a remote radio unit (RRU), an active antenna unit (AAU), or a remote radio head (RRH). It should be understood that an access network device may be a CU node, a DU node, or a device comprising both a CU node and a DU node. In addition, the CU may be categorized as a network device in the access network (RAN), or may be categorized as a network device in the core network (CN); this is not limited herein.

In different systems, the CU (or CU-CP and CU-UP), DU, or RU may have different names, but persons skilled in the art can understand their meanings. For example, in an O-RAN system, the CU may also be called O-CU (open CU), the DU may also be called O-DU, the CU-CP may also be called O-CU-CP, the CU-UP may also be called O-CU-UP, and the RU may also be called O-RU. For ease of description, CU, CU-CP, CU-UP, DU, and RU are used as examples in this application. Any of the CU (or CU-CP, CU-UP), DU, and RU in this application may be implemented by a software module, a hardware module, or a combination of software and hardware modules.

The embodiments of this application do not limit the form factor of the access network device. A device for implementing the functions of the access network device may be an access network device, or may be a device capable of supporting the access network device in implementing that function, such as a chip system. Such a device may be installed in or used in conjunction with the access network device.

### 3. User Plane Network Element

In the embodiments of this application, the user plane network element is used for packet routing and forwarding, QoS processing of user plane data, and the like. The user plane network element may forward user data packets according to routing rules from a session management network element, for example, forwarding uplink data to a data network or another user plane network element, and forwarding downlink data to another user plane network element or an access network device. The user plane network element may be the UPF (user plane function) in 5G communications.

### 4. Application Server

The application server is located on the cloud side and is used to provide application services to terminal devices and to collaboratively complete computing task processing with terminal devices, and the like. It may be an application (APP). The application server may also comprise an application-layer service processing module and an application function (AF), meaning that an AF may be deployed within the application server. In the embodiments of this application, the application server may be referred to as AS.

It should be understood that the communication system shown in FIG. 4 may also comprise other core network elements, other terminal devices, or other access network devices, such as an access and mobility management network element, a data management network element, and a policy control network element, and the like; this is not limited herein. The access and mobility management network element may be the access and mobility management function (AMF) in 5G systems, the data management network element may be the unified data management (UDM) in 5G systems, and the policy control network element may be the policy control function (PCF) in 5G systems.

It should be noted that the solutions in the embodiments of this application may also be applied to other communication systems, and the corresponding names may be replaced by the names of corresponding functions in those other communication systems.

The rate control method provided in the embodiments of this application is described in detail below with reference to FIG. 5 to FIG. 8.

For example, FIG. 5 is a schematic flowchart of a rate control method according to an embodiment of this application. This rate control method is described by using the communication among the terminal device, the access network device, the user plane network element, and the application server shown in FIG. 4 as an example. Of course, the entity performing the actions of the terminal device in this method may also be an apparatus/module in the terminal device, such as a chip, processor, or processing unit in the terminal device; the entity performing the actions of the access network device may also be an apparatus/module in the access network device, such as a chip, processor, or processing unit in the access network device; the entity performing the actions of the user plane network element may also be an apparatus/module in the user plane network element, such as a chip, processor, or processing unit in the user plane network element; and the entity performing the actions of the application server may also be an apparatus/module in the application server, such as a chip, processor, or processing unit in the application server. The embodiments of this application do not specifically limit this.

For example, as shown in FIG. 5, the rate control method comprises the following steps:
S501: The access network device sends first information to the user plane network element. Correspondingly, the user plane network element receives the first information from the access network device.

In the embodiments of this application, the first information is used to indicate that a first QoS requirement corresponding to a first QoS flow needs to be adjusted to a second QoS requirement, and the first QoS requirement and the second QoS requirement correspond to different data transmission rates. The first QoS flow refers to a service data flow satisfying QoS requirements provided by the application server to the terminal device; one service corresponds to one QoS flow, and different services correspond to different QoS flows. The services involving interaction between the application server and the terminal device may be computing service-related services, such as video rendering and AI model training, or data service-related services, such as sensing data, positioning data, and measurement data; this is not limited herein.

For each QoS flow, such as the first QoS flow, multiple QoS requirements may be configured. Each QoS requirement has a corresponding identifier, and different identifiers correspond to different QoS requirements. The identifier of a QoS requirement may be a 5G QoS identifier (5QI) in 5G, or may be an index of that QoS requirement among the multiple QoS requirements. Each QoS requirement also corresponds to a data transmission rate, and different QoS requirements correspond to different data transmission rates. This data transmission rate refers to the data transmission rate at which the application server sends the data of the first QoS flow, i.e., the rate at which the application server sends downlink data. In the embodiments of this application, the higher the QoS requirement, the higher the corresponding data transmission rate.

Each QoS requirement comprises different types of QoS parameters. The QoS parameters may comprise at least one of the following: GFBR, packet delay budget (PDB), and packet error rate (PER). It should be understood that the multiple QoS requirements configured for the first QoS flow have the same number and types of QoS parameters, but different parameter values, to characterize different delay, bandwidth, and other requirements for transmitting the first QoS flow. For example, the first QoS requirement comprises GFBR1, PDB1, and PER1, and the second QoS requirement comprises GFBR2, PDB2, and PER2, where GFBR1 differs from GFBR2, PDB1 differs from PDB2, and PER1 differs from PER2.

In a possible scenario, the identifier of a QoS requirement may also be considered as a QoS parameter; in other words, a QoS requirement comprises the identifier of the QoS requirement. It should also be understood that, in addition to the foregoing three types of QoS parameters, a QoS requirement may also comprise other types of QoS parameters that characterize transmission requirements such as delay and bandwidth; this is not limited herein.

In the embodiments of this application, in addition to data transmission QoS requirement parameters, a QoS requirement may also comprise computing QoS requirement parameters, such as computing delay requirements, computation load requirements, computing accuracy requirements, or computing power consumption requirements; this is not limited herein. In addition, in the embodiments of this application, a QoS requirement may also be referred to as a QoS configuration (profile), QoS information, QoS requirement specification, and the like; this is not limited herein.

It should be understood that the QoS requirements described in the embodiments of this application are equally applicable to uplink transmission; this is not limited herein.

The multiple QoS requirements corresponding to the first QoS flow may be configured or negotiated by the application server for the access network device through the core network control plane. In a possible implementation, the application server may send a first correspondence to the access network device through the core network control plane, and correspondingly, the access network device may receive the first correspondence from the application server through the core network control plane. The first correspondence comprises the identifiers of the QoS requirements corresponding to the first QoS flow and the correspondence between the QoS requirements corresponding to the first QoS flow and the data transmission rates; or the first correspondence comprises the identifiers of the QoS requirements corresponding to the first QoS flow, the QoS requirements corresponding to the first QoS flow, and the correspondence between the QoS requirements corresponding to the first QoS flow and the data transmission rates. The first correspondence may be configured in the form of a table. An example of the first correspondence is given in Table 1 below:

**Table 1**

| **Identifier of QoS requirement corresponding to first QoS flow** | **QoS requirement** | **Data transmission rate** |
|---|---|---|
| 0 | GFBR1, PDB1, PER1 | V1 |
| 1 | GFBR2, PDB2, PER2 | V2 |
| ... | ... | ... |
| N-1 (N is a positive integer) | GFBRN-1, PDBN-1, PERN-1 | VN-1 |

During initial configuration, the access network device may default the initially used QoS requirement to the QoS requirement corresponding to the highest transmission rate among the multiple QoS requirements, or the application server may indicate which of the multiple QoS requirements is to be used initially; this is not limited herein. In addition, during initial configuration, the application server may also deliver a quantized congestion notification (QCN) configuration to the access network device. The QCN configuration is used to configure the access network device to perform congestion feedback. The QCN configuration may comprise a notification mode configuration, which is used to configure the manner in which the access network device notifies and feeds back congestion information. In the embodiments of this application, the notification mode of the access network device is configured to notify via the user plane.

Optionally, the QCN configuration may also comprise a notification parameter configuration, which is used to configure the notification parameters sent by the access network device to the user plane network element for feeding back congestion. The notification parameters may be a congestion ratio, an identifier of the adjusted QoS requirement, or a QoS parameter in the adjusted QoS requirement, and the like; this is not limited herein. In a possible implementation, the notification parameters may also be specified by the protocol or pre-configured, in which case the QCN configuration may not comprise the notification parameter configuration.

In the embodiments of this application, the first QoS requirement is the QoS requirement currently used by the access network device. The first QoS requirement may be the initially configured QoS requirement or a QoS requirement after adjustment; this is not limited herein. In other words, the application server currently sends downlink data to the terminal device via the user plane network element and the access network device at the data transmission rate corresponding to the first QoS requirement.

Correspondingly, the access network device monitors the network status based on the first QoS requirement and determines whether the currently used first QoS requirement needs to be adjusted. For example, the access network device may determine, based on the channel state between the terminal device and the access network device, the air interface transmission condition of the first QoS flow, and the first QoS requirement corresponding to the first QoS flow, that the first QoS requirement needs to be adjusted to the second QoS requirement. The channel state between the terminal device and the access network device may be reported via the signal-to-interference-plus-noise ratio (SINR), and the air interface transmission condition of the first QoS flow may be reported via the buffer queue condition or the air interface transmission rate, and the like. That is, the access network device may determine whether the current QoS requirement needs to be adjusted based on the detected channel quality and air interface transmission speed. If adjustment is needed, it may determine which QoS requirement to adjust to based on the channel state and the air interface transmission condition-i.e., whether to adjust to a QoS requirement with a higher delay requirement or one with a lower delay requirement. For example, if the channel state is good and the queue has no backlog, indicating fast air interface transmission, the access network device determines that the QoS requirement needs to be adjusted to a QoS requirement with a higher delay requirement than the first QoS requirement (i.e., the second QoS requirement), indicating that the application server needs to increase the data transmission rate. If the channel state is poor and the queue backlog is large, indicating slow air interface transmission, the access network device determines that the QoS requirement needs to be adjusted to a QoS requirement with a lower delay requirement than the first QoS requirement (i.e., the second QoS requirement), indicating that the application server needs to decrease the data transmission rate.

Accordingly, the access network device determines that the first QoS requirement needs to be adjusted to the second QoS requirement and indicates this to the user plane network element via the first information. At this point, the first information is the foregoing notification parameter. The first information may comprise one of the following: a second congestion ratio when the first QoS flow is transmitted at the first QoS requirement, an identifier of the second QoS requirement, or a QoS parameter in the second QoS requirement. The specific parameter comprised in the first information may be pre-configured by the application server, or may be specified by the protocol or pre-configured; this is not limited herein. In other words, the access network device may feed back to the user plane network element the second congestion ratio, the identifier of the second QoS requirement, or a QoS parameter in the second QoS requirement to indicate that the current QoS requirement needs to be adjusted. It should be understood that the QoS parameter in the second QoS requirement comprised in the first information may be one or more QoS parameters selected from the second QoS requirement.

The second congestion ratio is determined based on the first QoS requirement and the second QoS requirement. That is, the access network device determines the second congestion ratio based on the first QoS requirement and the second QoS requirement. In a possible implementation, the access network device may determine the second congestion ratio based on a change in one or more QoS parameters in the first QoS requirement and the second QoS requirement.

In a specific example 1, the access network device may calculate the second congestion ratio based on the GFBR1 in the first QoS requirement and the GFBR2 in the second QoS requirement. For example, the second congestion ratio k2 = (GFBR1 - GFBR2) / GFBR1, 0 ≤ |k2| ≤ 1. When GFBR2 is less than GFBR1, this indicates that congestion exists in the network and the data transmission rate needs to be decreased; when GFBR2 is greater than or equal to GFBR1, this indicates that no congestion exists in the network and the data transmission rate needs to be increased, in which case the second congestion ratio k2 is negative and the access network device may set k2 to zero, i.e., k2 = 0, so that the second congestion ratio may be further expressed as k2 = max{(GFBR1 - GFBR2) / GFBR1, 0}.

Alternatively, the access network device may calculate the second congestion ratio based on the PDB1 in the first QoS requirement and the PDB2 in the second QoS requirement. For example, the second congestion ratio k2 = max{1 - PDB1/PDB2, 0}. When PDB2 is greater than or equal to PDB1, this indicates that congestion exists in the network and the data transmission rate needs to be decreased; when PDB2 is less than PDB1, this indicates that no congestion exists in the network and the data transmission rate needs to be increased.

Alternatively, the access network device may calculate the second congestion ratio based on the PER2 in the second QoS requirement. For example, the second congestion ratio k2 = max{(PER2 - PERTH) / PERTH, 0}, where PERTH is a preset PER threshold. When PER2 is greater than or equal to PERTH, this indicates that congestion exists in the network and the data transmission rate needs to be decreased; when PER2 is less than PERTH, this indicates that no congestion exists in the network and the data transmission rate needs to be increased.

In a specific example 2, the access network device may calculate the second congestion ratio based on GFBR1, PDB1, and PER1 in the first QoS requirement and GFBR2, PDB2, and PER2 in the second QoS requirement. For example: k2 = k2' + Δk2, where Δk2 = a·ΔGFBR + b·ΔPER + c·ΔPDB + d; k2' is a baseline value of the second congestion ratio; Δk2 is the change in the second congestion ratio; ΔGFBR = GFBR2 - GFBR1, ΔPER = PER2 - PER1, ΔPDB = PDB2 - PDB1; and a, b, c are weight values representing the influence of ΔGFBR, ΔPER, and ΔPDB, respectively, on the second congestion ratio, while d is a constant. That is, the access network device may establish a fitting relationship between the change in the second congestion ratio and the changes in the various parameters of the new and old QoS requirements to determine the second congestion ratio.

The foregoing k2', a, b, c, d may be a pre-set set of values, may be dynamically adjusted by the access network device based on the network status, may be selected by the access network device from multiple pre-set sets of values based on the network status, or may be set in real time by the access network device based on the network status; this is not limited herein. It should be understood that some of a, b, c may be zero, but not all simultaneously zero; if one of the three weight values is zero, the QoS parameter corresponding to that weight value does not participate in the calculation of the second congestion ratio, or equivalently, the second congestion ratio is calculated based on at least one QoS parameter.

It should also be understood that in the embodiments of this application, there are multiple possible designs for the conversion algorithm by which the access network device or user plane network element converts the identifier or QoS parameters of the second QoS requirement to the second congestion ratio. In addition to the foregoing simple conversion based on a single QoS parameter change and the linear fitting method, the conversion algorithm may also include but is not limited to preset deterministic algorithms, statistical analysis of historical data, non-linear fitting, machine learning methods, and the like. The network status inputs involved in the algorithm are also not limited to the GFBR, PER, and PDB indicators mentioned. For any feasible conversion algorithm in the embodiments of this application, it may satisfy the following relationship: F: {ΔGFBR, ΔPER, ΔPDB, ...} → second congestion ratio, with inputs that may comprise one or more QoS parameters and their combinations; no specific limitation is imposed herein.

In a possible design, the access network device may carry the first information in a packet it sends and deliver it to the user plane network element. For example, the access network device carries the first information in the header of a GTP-U packet and sends it.

Further, after receiving the first information, the user plane network element may determine, based on the first information, that the current QoS requirement needs to be adjusted, and then indicate to the application server that the data transmission rate needs to be adjusted. For the specific implementation, reference may be made to the related description of S503 below, which is not repeated herein. In the embodiments of this application, the application server also configures the multiple QoS requirements corresponding to the first QoS flow and the currently used QoS requirement for the user plane network element. In other words, both the application server and the access network device store the multiple QoS requirements corresponding to the first QoS flow and know which QoS requirement is currently in use.

S502: The user plane network element obtains the first packet of the terminal device.

The first packet comprises a first quantity of packets that have experienced congestion, a first quantity of packets that have not experienced congestion, and a quantity of packets that do not support ECN feedback. In the embodiments of this application, the first packet may be a packet that supports ECN feedback information. It should be understood that the first packet carries uplink data.

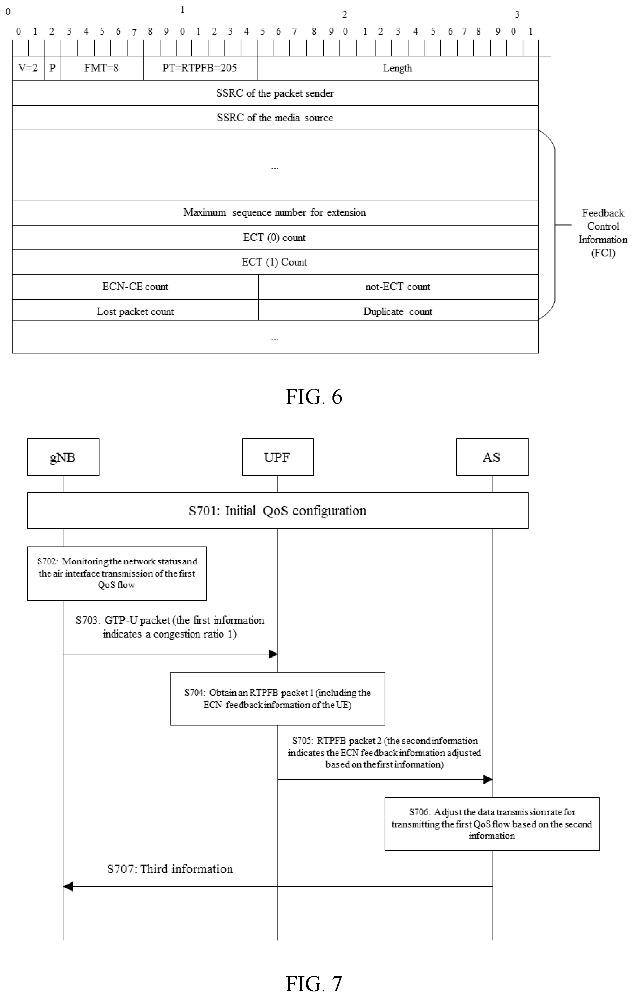

In a possible implementation, the first packet may adopt the RTCP feedback packet structure defined by Request for Comments (RFC) 4585, i.e., the type of the first packet is an RTPFB (real-time transport layer feedback messages) packet in the RTCP protocol. As shown in FIG. 6, which is a schematic structural diagram of an RTPFB packet that supports ECN feedback: the PT field identifies the type of the packet; the FMT field identifies the specific subtype of the feedback packet; the SSRC of packet sender field identifies the sender of this ECN-feedback-supporting RTPFB packet, i.e., the sender identifier; the SSRC of media source field identifies the receiver of this ECN-feedback-supporting RTPFB packet, i.e., the receiver identifier; and the FCI (feedback control information) field indicates the specific content of the feedback, comprising: the ECN-CE count field for indicating the quantity of packets that have experienced congestion, the ECT(0) count field or ECT(1) count field for indicating the quantity of packets that have not experienced congestion, the not-ECT count field for indicating the quantity of packets that do not support ECN feedback, the lost packets counter field, the duplication counter field, and others.

In the embodiments of this application, when the first packet adopts the packet structure shown in FIG. 6, the specific values of each field in the first packet have the following meanings: the PT field value is 205 (PT = 205), identifying the type of the first packet as an RTPFB packet; the FMT field value is 8 (FMT = 8), identifying the specific subtype of the first packet, which is an RTPFB packet, as an ECN feedback packet; the specific value of the SSRC of packet sender field identifies the terminal device that sends the first packet; the specific value of the SSRC of media source field identifies the application server that receives the first packet; in the FCI field, the specific value of the ECN-CE count field equals the first quantity of packets that have experienced congestion, denoted as ECN-CE Counter1; the specific value of the ECT(0) count field or ECT(1) count field equals the first quantity of packets that have not experienced congestion, denoted as ECT Counter1; and the specific value of the not-ECT count field equals the quantity of packets that do not support ECN feedback, denoted as not-ECT Counter.

In a possible design, the sum of the first quantity of packets that have experienced congestion, the first quantity of packets that have not experienced congestion, and the quantity of packets that do not support ECN feedback in the first packet-i.e., the total counted quantity of packets-equals ECN-CE Counter1 + ECT Counter1 + not-ECT Counter, denoted as S-Counter = ECN-CE Counter1 + ECT Counter1 + not-ECT Counter. This is typically pre-configured or specified. Moreover, the quantity of packets that do not support ECN feedback is typically constant.

It should be understood that in addition to the foregoing fields, the first packet also comprises a base sequence number field for identifying the sending sequence number of the packet. In the embodiments of this application, this field identifies the first packet as the L-th ECN-feedback-supporting RTPFB packet sent by the terminal device, where L is a positive integer not exceeding M, and M is the maximum number of ECN-feedback-supporting RTPFB packets that the terminal device supports sending.

In addition to ECN-feedback-supporting RTPFB packets, the first packet may also be a quick UDP internet connections (QUIC) ACK packet, which also contains count information for ECT(0), ECT(1), and ECN-CE; this is not described in further detail herein.

In a possible implementation, the terminal device sends the first packet to the user plane network element, and correspondingly, the user plane network element receives the first packet from the terminal device. That is, the first packet is sent by the terminal device through the user plane network element to the application server. The first packet may be an uplink packet currently being sent by the terminal device and received by the user plane network element, or may be the most recently sent uplink packet of the terminal device stored by the user plane network element; this is not limited herein.

It should be understood that the embodiments of this application do not limit the execution order of S501 and S502: S501 may be executed before S502, or S502 may be executed before S501; this is not limited herein.

S503: The user plane network element sends a second packet to the application server. Correspondingly, the application server receives the second packet from the user plane network element.

In the embodiments of this application, the second packet carries second information. The second information is used to determine the first congestion ratio when the first QoS flow is transmitted at the first QoS requirement, and the first congestion ratio is used to adjust the transmission rate of the first QoS flow. The second information is determined based on the first information, the first quantity of packets that have experienced congestion, the first quantity of packets that have not experienced congestion, and the quantity of packets that do not support ECN feedback.

That is, after obtaining the first packet and the first information, the user plane network element may determine the second information based on the first information and the first quantity of packets that have experienced congestion, the first quantity of packets that have not experienced congestion, and the quantity of packets that do not support ECN feedback in the first packet, and then carry the second information in the second packet and send it to the application server, so that the application server can determine the second congestion ratio based on the second information to adjust the data transmission rate.

In a possible implementation, the second information may comprise a second quantity of packets that have experienced congestion, a second quantity of packets that have not experienced congestion, and a quantity of packets that do not support ECN feedback.

The second quantity of packets that have experienced congestion may be determined based on the total counted quantity of packets and the first information. That is, the user plane network element may determine the second quantity of packets that have experienced congestion based on the first information and the total counted quantity of packets.

Further, the second quantity of packets that have experienced congestion is determined based on the total counted quantity of packets and the second congestion ratio when the first QoS flow is transmitted at the first QoS requirement, wherein the second congestion ratio is determined based on the first information. That is, the user plane network element determines, based on the obtained first information, the second congestion ratio present when the first QoS flow is transmitted at the first QoS requirement, and then determines the second quantity of packets that have experienced congestion based on the second congestion ratio and the total counted quantity of packets.

In the following, the second quantity of packets that have experienced congestion is denoted as ECN-CE Counter2, and the second quantity of packets that have not experienced congestion is denoted as ECT Counter2. The representations of the second congestion ratio (k2), the total counted quantity of packets (S-Counter), the first quantity of packets that have experienced congestion (ECN-CE Counter1), the first quantity of packets that have not experienced congestion (ECT Counter1), and the quantity of packets that do not support ECN feedback (not-ECT Counter) continue to follow the representations described above.

In a specific example 1, the first information comprises the second congestion ratio, which may be understood as the first information directly indicating the second congestion ratio k2. Accordingly, the user plane network element sums the first quantity of packets that have experienced congestion, the first quantity of packets that have not experienced congestion, and the quantity of packets that do not support ECN feedback in the first packet to obtain the total counted quantity of packets, i.e., S-Counter = ECN-CE Counter1 + ECT Counter1 + not-ECT Counter, and then calculates the second quantity of packets that have experienced congestion based on the second congestion ratio k2 in the first information and the total counted quantity of packets, i.e., ECN-CE Counter2 = k2 × S-Counter.

In a specific example 2, the first information comprises an identifier of the second QoS requirement. Accordingly, the user plane network element may compare the identifier of the second QoS requirement with the stored identifier of the first QoS requirement; upon finding an inconsistency, it may determine that the QoS requirement needs to be adjusted, and may determine the specific QoS parameter values of the second QoS requirement from the stored multiple QoS requirements based on the identifier of the second QoS requirement, thereby calculating the second congestion ratio based on the QoS parameters in the first QoS requirement and those in the second QoS requirement. In this case, the user plane network element may calculate the second congestion ratio based on the change in a single QoS parameter between the first QoS requirement and the second QoS requirement, such as the change in the GFBR parameter. For the specific calculation process of the user plane network element, reference may be made to the related description of how the access network device calculates the second congestion ratio in specific example 1 of S501 above; this is not repeated herein. Alternatively, the user plane network element may calculate the second congestion ratio based on changes in multiple QoS parameters between the first QoS requirement and the second QoS requirement. For the specific calculation process of the user plane network element, reference may be made to the related description of how the access network device calculates the second congestion ratio in specific example 2 of S501 above; this is not repeated herein. Accordingly, the user plane network element may calculate the second quantity of packets that have experienced congestion based on the second congestion ratio and the total counted quantity of packets. For the specific implementation, reference may be made to the calculation method for the second quantity of packets that have experienced congestion in specific example 1 of S503; this is not repeated herein.

In a specific example 3, the first information comprises a QoS parameter in the second QoS requirement. If there is only one QoS parameter in the second QoS requirement, such as the GFBR parameter, the specific process by which the user plane network element calculates the second congestion ratio may refer to the related description of how the access network device calculates the second congestion ratio in specific example 1 of S501 above; this is not repeated herein. If there are multiple QoS parameters in the second QoS requirement, the specific process by which the user plane network element calculates the second congestion ratio may refer to the related description of how the access network device calculates the second congestion ratio in specific example 2 of S501 above; this is not repeated herein. Accordingly, the user plane network element may calculate the second quantity of packets that have experienced congestion based on the second congestion ratio and the total counted quantity of packets. For the specific implementation, reference may be made to the calculation method for the second quantity of packets that have experienced congestion in specific example 1 of S503; this is not repeated herein.

The second quantity of packets that have not experienced congestion may be determined based on the total counted quantity of packets, the second quantity of packets that have experienced congestion, and the quantity of packets that do not support ECN feedback. For example, ECT Counter2 = S-Counter - ECN-CE Counter2 - not-ECT Counter.

Further, since the re-determined quantity of packets that have not experienced congestion may be a negative value, the second quantity of packets that have not experienced congestion may be the maximum of a third quantity and zero, wherein the third quantity equals the difference obtained by subtracting the second quantity of packets that have experienced congestion and the quantity of packets that do not support ECN feedback from the total counted quantity of packets. In other words, the user plane network element determines the third quantity as the difference obtained by subtracting the second quantity of packets that have experienced congestion and the quantity of packets that do not support ECN feedback from the total counted quantity of packets, and then determines the second quantity of packets that have not experienced congestion as the maximum of the third quantity and zero.

For example, ECT Counter2 = max{S-Counter - ECN-CE Counter2 - not-ECT Counter, 0}, where S-Counter - ECN-CE Counter2 - not-ECT Counter equals the third quantity.

That is, the user plane network element updates, by combining with the first information (the feedback of network status changes) from the access network device, the quantity of packets that have experienced congestion and the quantity of packets that have not experienced congestion as reported by the terminal device, and feeds back through the second packet to the application server the updated quantities of packets that have experienced congestion and packets that have not experienced congestion, along with the unchanged quantity of packets that do not support ECN feedback.

In a possible implementation, the second packet may be an RTPFB packet that supports ECN feedback, or a QUIC ACK packet.

In a possible design, the second packet may be obtained by modifying the first quantity of packets that have experienced congestion in the first packet to the second quantity of packets that have experienced congestion, and modifying the first quantity of packets that have not experienced congestion in the first packet to the second quantity of packets that have not experienced congestion. In this case, the first packet is a packet currently being sent by the terminal device and received by the user plane network element, and the user plane network element modifies the quantity of packets that have experienced congestion and the quantity of packets that have not experienced congestion in the first packet to obtain the second packet.

For example, the first packet is an RTPFB packet that supports ECN feedback. The user plane network element modifies the specific value of the ECN-CE count field in the first packet from ECN-CE Counter1 to ECN-CE Counter2, and modifies the specific value of the ECT(0) count field or ECT(1) count field from ECT Counter1 to ECT Counter2, thereby obtaining the second packet.

In a possible design, the user plane network element may locally generate the second packet, with the payload of the second packet being empty. In this case, the first packet may serve as the most recently sent uplink packet of the terminal device received by the user plane network element, which may be understood as: the user plane network element, when currently feeding back the second information, has not yet timely received the latest uplink packet sent by the terminal device, and therefore locally generates a second packet as the latest uplink packet sent by the terminal device to carry the second information; the locally generated second packet does not contain any uplink service data sent by the terminal device. Therefore, the second information in the second packet locally generated by the user plane network element is determined based on the first information and the quantity of packets that have experienced congestion, the quantity of packets that have not experienced congestion, and the quantity of packets that do not support ECN feedback in the most recently received uplink packet of the terminal device. At the same time, to ensure continuity of packet transmission, the sequence number of the second packet is one greater than the sequence number of the first packet, the sender identifier and the receiver identifier in the second packet are respectively the same as the sender identifier and the receiver identifier in the first packet, the sender identifier identifies the terminal device, and the receiver identifier identifies the application server. For example, if the base sequence number of the first packet is L, then the base sequence number of the second packet is L+1, and the specific values of the SSRC of packet sender field and the SSRC of media source field in the second packet are the same as those in the first packet.

In the embodiments of this application, in addition to the foregoing implementations, the user plane network element may also add a new field to the second packet to indicate the second information, or may reuse an existing field to indicate the second information; this is not limited herein. In addition, the second information may be indicated in other manners besides the foregoing three-state packet count approach; for example, the second information may directly indicate the first congestion ratio; this is not limited herein.

As a result, by modifying or generating ECN packets and reusing the RTCP transmission scheme of L4S, the user plane network element improves the compatibility of dynamic QoS-based rate control with existing devices, enabling the application server to adjust the transmission rate without requiring dedicated adaptation, benefiting from ecosystem support, and facilitating evolution toward a system that supports dynamic QoS.

S504: The application server adjusts the data transmission rate for transmitting the first QoS flow based on the second information.

In the embodiments of this application, after obtaining the second packet, the application server parses the second packet to obtain the second information, and determines the first congestion ratio based on the second information, thereby adjusting the data transmission rate for transmitting the first QoS flow based on the first congestion ratio.

In a possible implementation, the application server determines a third QoS requirement based on the second information and the first QoS requirement corresponding to the first QoS flow, and adjusts the data transmission rate of the first QoS flow according to the third QoS requirement. The third QoS requirement is one of the multiple configured QoS requirements other than the first QoS requirement. The third QoS requirement may be the same as or different from the second QoS requirement described above, and the first QoS requirement and the third QoS requirement correspond to different data transmission rates.

For example, the second information comprises the second quantity ECN-CE Counter2 of packets that have experienced congestion, the second quantity ECT Counter2 of packets that have not experienced congestion, and the quantity not-ECT Counter of packets that do not support ECN feedback. The first congestion ratio is denoted as k1, and satisfies the following relationship: k1 = ECN-CE Counter2 / (ECN-CE Counter2 + ECT Counter2 + not-ECT Counter).

After calculating the first congestion ratio k1 based on the second information, the application server determines, based on k1 and the currently used first QoS requirement, which QoS requirement to adjust to, i.e., the third QoS requirement. For example, the application server calculates, based on the first congestion ratio k1 and GFBR1 in the first QoS requirement, a reference GFBR value using the following formula: GFBR X = GFBR1 × (1 - k1). It then selects, from the multiple configured QoS requirements, the QoS requirement whose GFBR value is the closest to and less than GFBR X as the third QoS requirement. The data transmission rate corresponding to the third QoS requirement is the adjusted data transmission rate. That is, the application server adjusts the data transmission rate from the rate corresponding to the first QoS requirement (e.g., V1) to the rate corresponding to the third QoS requirement (e.g., V3) to transmit the first QoS flow.

It should be understood that the adjustment formula in the foregoing example operates by reducing the data transmission rate. GFBR X (equivalent to GFBR3) is at most equal to GFBR1, meaning that when GFBR X or GFBR3 is less than GFBR1, the data transmission rate may be decreased. In addition, there are some possible scenarios in which GFBR X or GFBR3 may be greater than or equal to GFBR1, indicating that the data transmission rate may be increased.

Further, after completing the rate adjustment, the application server may notify the user plane network element and the access network device of the QoS requirement corresponding to the adjusted data transmission rate (i.e., the third QoS requirement). For example, the application server separately sends third information to the access network device and the user plane network element. Correspondingly, the access network device receives the third information from the application server, and the user plane network element receives the third information from the application server. The third information is used to indicate the third QoS requirement. As a result, the access network device may switch the first QoS requirement to the third QoS requirement based on the third information to ensure the transmission of the first QoS flow, and the user plane network element may learn, based on the third information, that the currently used QoS requirement has been switched to the third QoS requirement, facilitating execution of the next rate control feedback.

Based on the rate control method illustrated in FIG. 5, the user plane network element learns in real time the latest network status changes and congestion conditions based on the QoS requirement change indicated by the first information sent by the access network device, and updates the ECN feedback information in the obtained first packet based on the first information to obtain the second information, which is then fed back to the application server via the second packet so that the application server can adjust the data transmission rate based on the second information. As a result, on one hand, the user plane network element does not need to obtain ECN feedback information by detouring through the terminal device via two air interfaces, and there is no interval for the terminal device to collect ECN feedback information, thereby improving the ECN feedback rate and reducing the task response time; on the other hand, the user plane network element feeds back, through the second packet, ECN feedback information adjusted based on the first information, so that the data transmission rate that the application server can adjust better matches the real-time network status, thereby also reducing the task response time.

The rate control method illustrated in FIG. 5 is described in detail below in conjunction with specific scenarios, using AS as the application server, UPF as the user plane network element, gNB as the access network device, QoS requirement 1 as the first QoS requirement, and QoS requirement 2 as the second QoS requirement as examples.

For example, FIG. 7 is a schematic flowchart of a rate control method according to an embodiment of this application. As shown in FIG. 7, the rate control method comprises the following steps:
S701: The AS performs initial QoS configuration with the UPF and gNB.

For example, the AS may separately negotiate and configure multiple QoS requirements-such as QoS requirements 1 through 6-for the first QoS flow it transmits with the UPF and the gNB. Different QoS requirements correspond to different data transmission rates for transmitting the first QoS flow, and each QoS requirement comprises QoS parameters such as GFBR, PDB, and PER. Furthermore, QoS requirement 1 among QoS requirements 1 through 6 is used as the initially used QoS requirement, meaning that the AS currently transmits the first QoS flow at the data transmission rate corresponding to QoS requirement 1.

In a possible implementation, the AS may trigger the 5GC to send a protocol data unit (PDU) session resource establishment request or modification message to the gNB, carrying the multiple QoS requirements corresponding to the first QoS flow in the PDU session resource establishment request or modification message. Optionally, the PDU session resource establishment request or modification message may also carry a QCN configuration. For the specific descriptions of QoS requirements and QCN configuration, reference may be made to the related description in S501 above; this is not repeated herein.

S702: The gNB monitors the network status and the air interface transmission condition of the first QoS flow.

During the period in which the first QoS flow is transmitted at QoS requirement 1, the gNB monitors in real time the network status changes and the air interface transmission condition of the first QoS flow transmitted at QoS requirement 1, and determines whether the current network status and air interface transmission condition match QoS requirement 1. If they do not match, the gNB determines, based on the current network status and air interface transmission condition, the matching QoS requirement from the multiple configured QoS requirements, for example QoS requirement 2. For instance, if the gNB detects that the network status is poor and there is congestion in the air interface transmission, it may select a QoS requirement with a lower delay requirement than QoS requirement 1; if the gNB detects that the network status is good and there is no congestion in the air interface transmission, it may select a QoS requirement with a higher delay requirement than QoS requirement 1. For the specific implementation of S702, reference may be made to the related description in S501 above; this is not repeated herein.

S703: The gNB sends a GTP-U packet to the UPF. Correspondingly, the UPF receives the GTP-U packet from the gNB.

The header of the GTP-U packet carries first information, which is used to indicate the congestion ratio 1 when the first QoS flow is transmitted at QoS requirement 1. That is, after determining based on S702 that the QoS requirement needs to be adjusted, the gNB determines congestion ratio 1 based on the determined new QoS requirement (i.e., QoS requirement 2) and the old QoS requirement (i.e., QoS requirement 1), and carries congestion ratio 1 in the header of the GTP-U packet in the form of first information and sends it to the UPF.

For example, GFBR1 in QoS requirement 1 = 6 kb/s and GFBR2 in QoS requirement 2 = 4 kb/s. The gNB calculates congestion ratio 1 based on GFBR1 and GFBR2, i.e., congestion ratio 1 = (6 - 4) / 6 = 33%, indicating that congestion may exist and the data transmission rate needs to be decreased.

For another example, GFBR1 in QoS requirement 1 = 4 kb/s and GFBR2 in QoS requirement 2 = 6 kb/s. The gNB calculates congestion ratio 1 based on GFBR1 and GFBR2, i.e., congestion ratio 1 = (4 - 6) / 4 = -50%, indicating that no congestion exists and the data transmission rate needs to be increased. In this case, congestion ratio 1 may be set to zero, i.e., congestion ratio 1 = 0.

S704: The UPF obtains RTPFB packet 1.

RTPFB packet 1 comprises ECN feedback information of the UE, including the first quantity of packets that have experienced congestion-for example, ECN-CE Counter1 = 150-the first quantity of packets that have not experienced congestion-for example, ECT Counter1 = 200-and the quantity of packets that do not support ECN feedback-for example, not-ECT Counter = 50. In other words, the value of the ECN-CE count field in RTPFB packet 1 is 150, the value of the ECT(1) count field is 200, and the value of the not-ECT count field is 50.

For example, the UPF receives RTPFB packet 1 from the UE, where RTPFB packet 1 is the packet currently being sent by the UE to the AS.

It should be understood that the embodiments of this application do not limit the execution order of S703 and S704.

S705: The UPF sends RTPFB packet 2 to the AS. Correspondingly, the AS receives RTPFB packet 2 from the UPF.

RTPFB packet 2 comprises second information, which is determined based on the first information in the GTP-U packet and the ECN feedback information in RTPFB packet 1. The second information comprises the second quantity ECN-CE Counter2 of packets that have experienced congestion, the second quantity ECT Counter2 of packets that have not experienced congestion, and the quantity not-ECT Counter of packets that do not support ECN feedback.

For example, after obtaining the ECN feedback information from RTPFB packet 1, the UPF sums the first quantity of packets that have experienced congestion, the first quantity of packets that have not experienced congestion, and the quantity of packets that do not support ECN feedback in the ECN feedback information to obtain the total counted quantity of packets 1, i.e., S_Counter1 = 150 + 200 + 50 = 400.

Further, the UPF calculates the second quantity of packets that have experienced congestion based on the total counted quantity of packets 1 and congestion ratio 1 (e.g., 33% in the foregoing example). For example, if congestion ratio 1 = 33%, then ECN-CE Counter2 = 400 × 33% = 132, and ECT Counter2 = max{S_Counter1 - ECN-CE Counter2 - not-ECT Counter, 0} = max{400 - 132 - 50, 0} = 218. When RTPFB packet 1 is the packet currently being sent by the UE to the AS, the UPF may directly modify the value of the ECN-CE count field in RTPFB packet 1 from 150 to 132, and modify the value of the ECT(1) count field from 200 to 218, and send the modified RTPFB packet 1 to the AS as RTPFB packet 2.

For another example, referring to the foregoing case where congestion ratio 1 = 0: ECN-CE Counter2 = 400 × 0 = 0, and ECT Counter2 = max{S_Counter1 - ECN-CE Counter2 - not-ECT Counter, 0} = max{400 - 0 - 50, 0} = 350. When RTPFB packet 1 is the packet currently being sent by the UE to the AS, the UPF may directly modify the value of the ECN-CE count field in RTPFB packet 1 from 150 to 0, and modify the value of the ECT(1) count field from 200 to 350, and send the modified RTPFB packet 1 to the AS as RTPFB packet 2.

S706: The AS adjusts the data transmission rate for transmitting the first QoS flow based on the second information.

After obtaining RTPFB packet 2, the AS calculates congestion ratio 2 based on the second information in RTPFB packet 2-comprising ECN-CE Counter2 indicated by the ECN-CE count field, ECT Counter2 indicated by the ECT(1) count field, and not-ECT Counter indicated by the not-ECT count field-and selects the adjusted QoS requirement based on congestion ratio 2, thereby adjusting the data transmission rate for transmitting the first QoS flow.

Continuing with the foregoing example: GFBR1 = 6 kb/s, ECN-CE Counter2 = 132, ECT Counter2 = 218, not-ECT Counter = 50, and congestion ratio 2 = 132 / (132 + 218 + 50) = 33%. The AS then calculates the reference GFBR value based on congestion ratio 2 and GFBR1 in QoS requirement 1, for example, reference GFBR = 6 × (1 - 33%) = 4.02 kb/s, and selects the QoS requirement from the multiple configured QoS requirements whose GFBR value is the closest to and less than the reference GFBR value as the adjusted QoS requirement. For example, GFBR2 = 4 kb/s in QoS requirement 2 is the closest to 4.02 kb/s, so the AS adjusts the data transmission rate from the rate corresponding to QoS requirement 1 to the rate corresponding to QoS requirement 2.

Continuing with the other foregoing example: GFBR1 = 4 kb/s, ECN-CE Counter2 = 0, ECT Counter2 = 350, not-ECT Counter = 50, and congestion ratio 2 = 0%. The AS calculates the reference GFBR value based on congestion ratio 2 and GFBR1 in QoS requirement 1, for example, reference GFBR = 4 × (1 - 0%) = 4 kb/s. In this case, the reference GFBR value equals GFBR1 in QoS requirement 1. The AS may maintain the data transmission rate corresponding to QoS requirement 1 to transmit the first QoS flow, or may select the QoS requirement from the multiple QoS requirements whose GFBR value is higher than the reference GFBR as the QoS requirement for adjusting the data transmission rate, for example QoS requirement 2 with GFBR2 = 6 kb/s, i.e., the AS adjusts the data transmission rate from the rate corresponding to QoS requirement 1 to the rate corresponding to QoS requirement 2.

In the foregoing example, the adjusted QoS requirement determined by the AS is the same as that determined by the gNB. It should be understood that in some scenarios, the adjusted QoS requirement determined by the AS may differ from that determined by the gNB.

S707: The AS sends third information to the gNB. Correspondingly, the gNB receives the third information from the AS.

The third information is used to indicate the QoS requirement corresponding to the adjusted data transmission rate. That is, after determining the adjusted data transmission rate, the AS notifies the gNB of the QoS requirement corresponding to the adjusted data transmission rate-for example, QoS requirement 2-so that the gNB transmits the first QoS flow according to QoS requirement 2. It should be understood that the AS may also send the third information to the UPF.

In the scenario illustrated in FIG. 7, the gNB monitors the network conditions and switches QoS requirement levels, feeding back congestion ratio information to the UPF in a timely manner. The UPF then processes the obtained ECN feedback information of the UE based on the congestion ratio information, and transmits the processed ECN feedback information to the application server via an ECN feedback packet for rate adjustment. As a result, the UPF does not need to detour through the UE or wait for the UE to collect statistics on congestion conditions over a time window in order to obtain congestion information. Furthermore, the UPF rewrites or directly generates the ECN feedback information uploaded by the UE so that it is compatible with the existing L4S application ecosystem. This enables a more immediate, accurate, and compatible rate control mechanism.

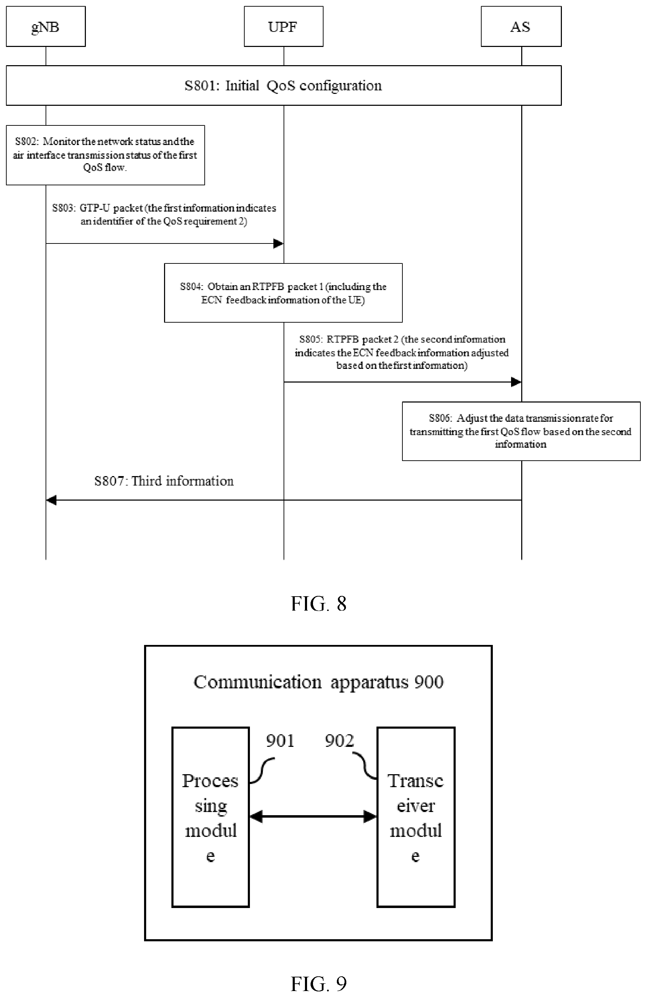

For another example, FIG. 8 is a schematic flowchart of a rate control method according to an embodiment of this application. As shown in FIG. 8, the rate control method comprises the following steps:
S801: The AS performs initial QoS configuration with the UPF and gNB.

S802: The gNB monitors the network status and the air interface transmission condition of the first QoS flow.

For the specific implementation of S801 and S802, reference may be made to the related descriptions of S701 and S702 above; this is not repeated herein.

S803: The gNB sends a GTP-U packet to the UPF. Correspondingly, the UPF receives the GTP-U packet from the gNB.

The header of the GTP-U packet carries first information, which is used to indicate the identifier of QoS requirement 2. That is, after determining based on S802 that the QoS requirement needs to be adjusted (to QoS requirement 2), the gNB carries the identifier of the QoS requirement to be adjusted in the header of the GTP-U packet in the form of first information and sends it to the UPF.

S804: The UPF obtains RTPFB packet 1.

RTPFB packet 1 comprises ECN feedback information of the UE, including the first quantity of packets that have experienced congestion-for example, ECN-CE Counter1 = 150-the first quantity of packets that have not experienced congestion-for example, ECT Counter1 = 200-and the quantity of packets that do not support ECN feedback-for example, not-ECT Counter = 50. In other words, the value of the ECN-CE count field in RTPFB packet 1 is 150, the value of the ECT(1) count field is 200, and the value of the not-ECT count field is 50.

For example, RTPFB packet 1 is the most recent packet already sent by the UE to the AS that is stored by the UPF, and the sequence number of RTPFB packet 1 is 4.

S805: The UPF sends RTPFB packet 2 to the AS. Correspondingly, the AS receives RTPFB packet 2 from the UPF.

RTPFB packet 2 comprises second information, which is determined based on the first information in the GTP-U packet and the ECN feedback information in RTPFB packet 1. The second information comprises the second quantity ECN-CE Counter2 of packets that have experienced congestion, the second quantity ECT Counter2 of packets that have not experienced congestion, and the quantity not-ECT Counter of packets that do not support ECN feedback.

For example, RTPFB packet 2 is a packet locally generated by the UPF and does not carry uplink data sent by the UE, i.e., the payload is empty. The specific values of the ECN-CE count field and the ECT(1) count field in RTPFB packet 2 are determined and calculated by the UPF based on the first information in the GTP-U packet and the ECN feedback information in RTPFB packet 1. Specifically, the UPF determines QoS requirement 2 from the multiple QoS requirements based on the identifier of QoS requirement 2 indicated by the first information, and calculates congestion ratio 1 using GFBR1 in QoS requirement 1 and GFBR2 in QoS requirement 2: congestion ratio 1 = max{(GFBR1 - GFBR2) / GFBR1, 0}. The UPF then calculates the second quantity ECN-CE Counter2 of packets that have experienced congestion and the second quantity ECT Counter2 of packets that have not experienced congestion based on congestion ratio 1, the first quantity of packets that have experienced congestion, the first quantity of packets that have not experienced congestion, and the quantity of packets that do not support ECN feedback. For the specific implementation, reference may be made to the related description in S705 above; this is not repeated herein.

The UPF then writes ECN-CE Counter2 into the ECN-CE count field of RTPFB packet 2, writes ECT Counter2 into the ECT(1) count field, and writes not-ECT Counter into the not-ECT count field.

Since RTPFB packet 2 is locally generated by the UPF, in order to ensure continuity of RTPFB packets, the locally generated RTPFB packet must be continuous with the RTPFB packets sent by the UE. For example, if the most recently received RTPFB packet from the UE received by the UPF is RTPFB packet 1 with sequence number 4, then the sequence number of RTPFB packet 2 is 5, and the specific values of the SSRC of packet sender field and the SSRC of media source field in RTPFB packet 2 are the same as those in RTPFB packet 1.

S806: The AS adjusts the data transmission rate for transmitting the first QoS flow based on the second information.

S807: The AS sends third information to the gNB. Correspondingly, the gNB receives the third information from the AS.

The third information is used to indicate the QoS requirement corresponding to the adjusted data transmission rate.

For the specific implementation of S806 and S807, reference may be made to the related descriptions of S706 and S707 above; this is not repeated herein.

In the scenario illustrated in FIG. 8, unlike the scenario illustrated in FIG. 7, the gNB conveys to the UPF the identifier of the QoS requirement to be updated. The UPF then leverages the new and old QoS requirements and the changes in the corresponding multiple QoS parameter indicators to gain a more comprehensive perception of the network status and fluctuations. Through algorithm design or training on historical data, the UPF derives the mapping relationship between changes in various QoS parameter indicators and the congestion ratio, thereby determining the congestion ratio and processing the obtained ECN feedback information of the UE, and transmitting the processed ECN feedback information to the application server via an ECN feedback packet for rate adjustment.

It should be understood that FIG. 7 and FIG. 8 illustrate, as a simple example, the manner of converting a change in a single QoS parameter between the new and old QoS requirements into a congestion ratio. The embodiments of this application do not limit the conversion algorithm or the setting of QoS parameters. The conversion algorithm may satisfy the following relationship: F: {ΔGFBR, ΔPER, ΔPDB, ...} → congestion ratio 1, with inputs that may comprise one or more QoS parameters and their combinations. In addition, in the scenario illustrated in FIG. 8 where the first information is used to indicate the identifier of QoS requirement 2, this may alternatively be replaced by the first information being used to indicate at least one QoS parameter in QoS requirement 2, such as GFBR2, PER2, and PDB2. The manner in which the UPF converts the QoS parameters of QoS requirement 2 into a congestion ratio is similar to the manner in which it converts the identifier of QoS requirement 2 into a congestion ratio; this is not elaborated herein.

It should also be understood that, in addition to the downlink transmission described in the embodiments, the embodiments of this application are also applicable to the adjustment of uplink data rates. Furthermore, the embodiments of this application are not limited to adjustments of data transmission rates on the application server side; they may also be compatible with specific device-cloud collaborative applications, such as adjustments to the video rendering frame rate or AI application model split interactions by the application server.

In the foregoing embodiments, the methods and/or steps implemented by the user plane network element may also be implemented by components usable in the user plane network element (such as a processor, chip, chip system, circuit, logical module, or software); the methods and/or steps implemented by the access network device may also be implemented by components usable in the access network device (such as a processor, chip, chip system, circuit, logical module, DU, or software). For example, when the executing entity of the foregoing embodiments is a DU in the access network device, the sending or receiving steps performed by the access network device may be replaced by sending or receiving performed by the DU, which may further be sending by the DU to an RU or receiving by the DU from an RU. The methods and/or steps implemented by the application server may also be implemented by components usable in the application server (such as a processor, chip, chip system, circuit, logical module, or software).

The foregoing has mainly introduced the solutions provided in this application. Correspondingly, this application also provides a communication device configured to implement the various methods in the foregoing method embodiments. The communication device may be the user plane network element in the foregoing method embodiments, or a device comprising the user plane network element, or a component usable in the user plane network element, such as a chip or chip system. Alternatively, the communication device may be the access network device in the foregoing method embodiments, or a device comprising the access network device, or a component usable in the access network device, such as a chip or chip system. Alternatively, the communication device may be the application server in the foregoing method embodiments, or a device comprising the application server, or a component usable in the application server, such as a chip or chip system.

In some embodiments, in order to implement the foregoing functions, the communication device comprises corresponding hardware structures and/or software modules for performing each function. Persons skilled in the art should readily appreciate that, in combination with the units and algorithm steps of the examples described in the embodiments disclosed in this specification, this application may be implemented by hardware or a combination of hardware and computer software. Whether a function is performed by hardware or hardware driven by computer software depends on the particular application and design constraints of the technical solution. Persons skilled in the art may use different methods to implement the described functions for each particular application, but such implementation should not be considered to go beyond the scope of this application.

In the embodiments of this application, the communication device may be divided into functional modules based on the foregoing method embodiments. For example, functional modules may be divided to correspond to each function, or two or more functions may be integrated into one processing module. The integrated module may be implemented in the form of hardware, or may be implemented in the form of a software functional module. It should be noted that the division into modules in the embodiments of this application is illustrative only, is merely a logical functional division, and may be divided differently in actual implementation.

Taking the communication device as the user plane network element, access network device, or application server in the foregoing method embodiments as an example, FIG. 9 is a schematic structural diagram of a communication device according to an embodiment of this application. As shown in FIG. 9, the communication device 900 comprises a processing module 901 and a transceiver module 902. The processing module 901 is configured to perform the processing functions of the user plane network element, access network device, or application server in the foregoing method embodiments. The transceiver module 902 is configured to perform the transceiving functions of the user plane network element, access network device, or application server in the foregoing method embodiments.

All relevant content of each step involved in the foregoing method embodiments may be referenced in the functional descriptions of the corresponding functional modules, and is not repeated herein.

Since the communication device 900 provided in this embodiment can perform the foregoing methods, the technical effects that it can achieve may be understood by reference to the foregoing method embodiments, and are not repeated herein.

In a possible design, in the embodiments of this application, the transceiver module 902 may comprise a receiving module and a sending module (not shown in FIG. 9), wherein the sending module and the receiving module are respectively configured to implement the sending function and the receiving function of the communication device 900.

In a possible design, the communication device 900 may further comprise a storage module (not shown in FIG. 9) that stores a program or instructions. When the processing module 901 executes the program or instructions, the communication device 900 is enabled to perform the functions of the user plane network element, access network device, or application server in the method illustrated in FIG. 5.

In some embodiments, the processing module 901 in the communication device 900 may be implemented by a processor or processor-related circuit components, and may be a processor or processing unit; the transceiver module 902 may be implemented by a transceiver or transceiver-related circuit components, and may be a transceiver or transceiver unit.

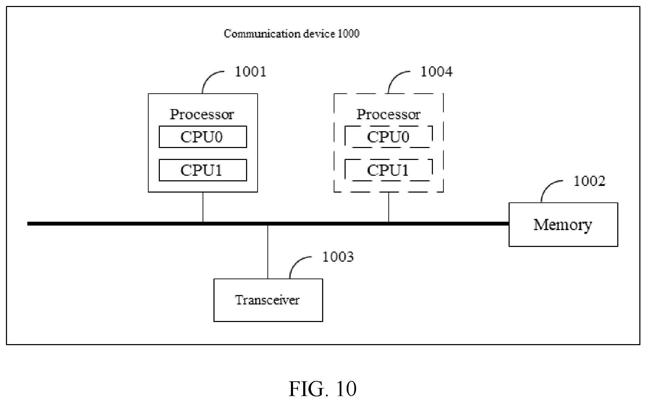

For example, FIG. 10 is a schematic structural diagram of another communication device according to an embodiment of this application. The communication device may be a user plane network element, an access network device, or an application server, or may be a chip (system) or other component or assembly that may be provided in a user plane network element, an access network device, or an application server. As shown in FIG. 10, the communication device 1000 may comprise a processor 1001. In a possible design, the communication device 1000 may further comprise a memory 1002 and/or a transceiver 1003. The processor 1001 is coupled to the memory 1002 and the transceiver 1003, for example via a communication bus.

The components of the communication device 1000 are described in detail below with reference to FIG. 10.

The processor 1001 is the control center of the communication device 1000 and may be one processor or a collective term for multiple processing elements. For example, the processor 1001 comprises one or more central processing units (CPUs), or may be an application-specific integrated circuit (ASIC), or may be one or more integrated circuits configured to implement the embodiments of this application, such as one or more microprocessors (digital signal processors, DSPs) or one or more field programmable gate arrays (FPGAs).

In a possible design, the processor 1001 may execute various functions of the communication device 1000 by running or executing software programs stored in the memory 1002 and invoking data stored in the memory 1002.

In a specific implementation, as an embodiment, the processor 1001 may comprise one or more CPUs, such as CPU0 and CPU1 shown in FIG. 10.

In a specific implementation, as an embodiment, the communication device 1000 may also comprise multiple processors, such as processor 1001 and processor 1004 shown in FIG. 10. Each of these processors may be a single-core processor or a multi-core processor. The processor herein may refer to one or more devices, circuits, and/or processing cores configured to process data (e.g., computer program instructions).

The memory 1002 is configured to store software programs for executing the solutions of this application, and is controlled for execution by the processor 1001. For specific implementations, reference may be made to the foregoing method embodiments; this is not repeated herein.

In a possible design, the memory 1002 may be a read-only memory (ROM) or another type of static storage device capable of storing static information and instructions, a random access memory (RAM) or another type of dynamic storage device capable of storing information and instructions, an electrically erasable programmable read-only memory (EEPROM), a compact disc read-only memory (CD-ROM) or other optical disc storage, optical disc storage (including compact discs, laser discs, optical discs, digital versatile discs, Blu-ray discs, etc.), magnetic disk storage media or other magnetic storage devices, or any other medium that can be used to carry or store expected program code in the form of instructions or data structures and that can be accessed by a computer, without limitation. The memory 1002 may be integrated with the processor 1001, or may exist independently and be coupled to the processor 1001 through an interface circuit (not shown in FIG. 10) of the communication device 1000; this is not specifically limited in the embodiments of this application.

The transceiver 1003 is configured for communication with other communication devices. For example, when the communication device 1000 is a terminal device, the transceiver 1003 may be configured to communicate with an access network device or another terminal device. For another example, when the communication device 1000 is a network device, the transceiver 1003 may be configured to communicate with a terminal device or another network device.

In a possible design, the transceiver 1003 may comprise a receiver and a transmitter (not shown separately in FIG. 10), wherein the receiver is configured to implement the receiving function and the transmitter is configured to implement the sending function.

In a possible design, the transceiver 1003 may be integrated with the processor 1001, or may exist independently and be coupled to the processor 1001 through an interface circuit (not shown in FIG. 10) of the communication device 1000; this is not specifically limited in the embodiments of this application.

It should be noted that the structure of the communication device 1000 shown in FIG. 10 does not constitute a limitation on the communication device. An actual communication device may comprise more or fewer components than those shown in the figure, or may have certain components combined, or may have different component arrangements.

In addition, for the technical effects of the communication device 1000, reference may be made to the technical effects of the methods described in the foregoing method embodiments; this is not repeated herein.

An embodiment of this application further provides a computer-readable storage medium, wherein the storage medium stores a computer program or instructions, and when the computer program or instructions are executed by a computer, the functions in the foregoing method embodiments are implemented.

An embodiment of this application further provides a computer program product, wherein when the computer program product is executed by a computer, the functions in the foregoing method embodiments are implemented.

In the foregoing embodiments, implementation may be realized in whole or in part by software, hardware, firmware, or any combination thereof. When implemented using a software program, implementation may be realized in whole or in part in the form of a computer program product. The computer program product comprises one or more computer instructions. When the computer program instructions are loaded and executed on a computer, the processes or functions according to the embodiments of this application are generated in whole or in part. The computer may be a general-purpose computer, a dedicated computer, a computer network, or another programmable apparatus. The computer instructions may be stored in a computer-readable storage medium, or may be transmitted from one computer-readable storage medium to another; for example, the computer instructions may be transmitted from a website site, computer, server, or data center to another website site, computer, server, or data center by wire (e.g., coaxial cable, optical fiber, digital subscriber line (DSL)) or wirelessly (e.g., infrared, radio, microwave). The computer-readable storage medium may be any available medium that can be accessed by a computer, or may be a data storage device such as a server or data center integrating one or more available media. The available media may be magnetic media (e.g., floppy disks, hard disk drives, magnetic tapes), optical media (e.g., DVDs), or semiconductor media (e.g., solid state disks (SSDs)), and the like.

Persons of ordinary skill in the art may appreciate that, in combination with the units and algorithm steps of the examples described in the embodiments disclosed in this specification, this application may be implemented by electronic hardware or a combination of computer software and electronic hardware. Whether these functions are performed by hardware or software depends on the particular application and design constraints of the technical solution. Persons skilled in the art may use different methods to implement the described functions for each particular application, but such implementation should not be considered to go beyond the scope of this application.

Persons skilled in the art can clearly appreciate that, for the convenience and brevity of description, the specific working processes of the foregoing described systems, devices, and units may be understood by reference to the corresponding processes in the foregoing method embodiments, and are not repeated herein.

In the several embodiments provided in this application, it should be understood that the disclosed systems, devices, and methods may be implemented in other ways. For example, the foregoing device embodiments are merely illustrative. For instance, the division of units is merely a logical functional division; there may be other division manners in actual implementation. For example, multiple units or components may be combined or integrated into another system, or some features may be ignored or not performed. In addition, the displayed or discussed mutual couplings, or direct couplings or communication connections, may be implemented through some interfaces. The indirect couplings or communication connections between devices or units may be implemented in electrical, mechanical, or other forms.

Units described as separate components may or may not be physically separate; components shown as units may or may not be physical units, i.e., they may be located in one place, or they may be distributed across multiple network units. Some or all of the units may be selected based on actual needs to achieve the objectives of the solutions in this embodiment.

In addition, functional units in the embodiments of this application may be integrated into one processing unit, or each unit may exist physically alone, or two or more units may be integrated into one unit.

When the functions are implemented in the form of a software functional unit and sold or used as a standalone product, they may be stored in a computer-readable storage medium. Based on such understanding, the technical solution of this application, or the part that contributes to the prior art, or part of the technical solution, may be embodied in the form of a software product. The computer software product is stored in a storage medium and comprises several instructions for causing a computer device (which may be a personal computer, a server, or an access network device, etc.) to perform all or some of the steps of the methods described in the embodiments of this application. The foregoing storage medium includes: a USB flash drive, a removable hard disk, a ROM, a RAM, a magnetic disc, an optical disc, or other media capable of storing program code.

Although the embodiments of this application have been described with reference to the present disclosure, during implementation of the claimed application, persons skilled in the art may understand and implement other variations of the disclosed embodiments by viewing the drawings, the disclosure, and the appended claims. In the claims, the word "comprising" does not exclude other components or steps, and "a" or "an" does not exclude a plurality. A single processor or other unit may implement several functions recited in the claims. The fact that certain measures are recited in mutually different dependent claims does not indicate that a combination of these measures cannot be used to achieve a good effect.

Although this application has been described with reference to specific features and embodiments thereof, it is apparent that various modifications and combinations may be made without departing from the spirit and scope of this application. Accordingly, this specification and the accompanying drawings are merely exemplary illustrations of this application as defined by the appended claims, and are deemed to cover any and all modifications, variations, combinations, or equivalents within the scope of this application. It is clear that persons skilled in the art can make various changes and modifications to this application without departing from the spirit and scope of this application. This application is therefore intended to cover such changes and modifications provided that they fall within the scope of the claims of this application and their equivalent technologies.

## Claims

1. A rate control method, wherein the method comprises:
receiving first information from an access network device, wherein the first information is used to indicate that a first quality of service (QoS) requirement corresponding to a first QoS flow needs to be adjusted to a second QoS requirement, and the first QoS requirement and the second QoS requirement correspond to different data transmission rates;
obtaining a first packet of a terminal device, wherein the first packet comprises a first quantity of packets that have experienced congestion, a first quantity of packets that have not experienced congestion, and a quantity of packets that do not support explicit congestion notification (ECN) feedback; and
sending a second packet to an application server, wherein the second packet carries second information, the second information is determined based on the first information, the first quantity of packets that have experienced congestion, the first quantity of packets that have not experienced congestion, and the quantity of packets that do not support ECN feedback, the second information is used to determine a first congestion ratio when the first QoS flow is transmitted at the first QoS requirement, and the first congestion ratio is used to adjust a data transmission rate of the first QoS flow.

2. A rate control method, wherein the method comprises:
sending, by an access network device, first information to a user plane network element, wherein the first information is used to indicate that a first QoS requirement corresponding to a first quality of service (QoS) flow needs to be adjusted to a second QoS requirement, and the first QoS requirement and the second QoS requirement correspond to different data transmission rates;
receiving, by the user plane network element, the first information from the access network device and obtaining a first packet of a terminal device, wherein the first packet comprises a first quantity of packets that have experienced congestion, a first quantity of packets that have not experienced congestion, and a quantity of packets that do not support explicit congestion notification (ECN) feedback; and
sending, by the user plane network element, a second packet to an application server, wherein the second packet carries second information, the second information is determined based on the first information, the first quantity of packets that have experienced congestion, the first quantity of packets that have not experienced congestion, and the quantity of packets that do not support ECN feedback, the second information is used to determine a first congestion ratio when the first QoS flow is transmitted at the first QoS requirement, and the first congestion ratio is used to adjust a data transmission rate of the first QoS flow.

3. The method according to claim 1 or 2, wherein the first information comprises one of the following: a second congestion ratio when the first QoS flow is transmitted at the first QoS requirement, an identifier of the second QoS requirement, or a QoS parameter in the second QoS requirement, wherein the second congestion ratio is determined based on the first QoS requirement and the second QoS requirement.

4. The method according to claim 3, wherein the QoS parameter comprises at least one of the following: a guaranteed flow bit rate (GFBR), a packet delay budget (PDB), or a packet error rate (PER).

5. The method according to any one of claims 1 to 4, wherein the first information is carried in a packet sent by the access network device.

6. The method according to any one of claims 1 to 5, wherein the second information comprises a second quantity of packets that have experienced congestion, a second quantity of packets that have not experienced congestion, and a quantity of packets that do not support ECN feedback; wherein the second quantity of packets that have experienced congestion is determined based on a total counted quantity of packets and the first information, the second quantity of packets that have not experienced congestion is determined based on the total counted quantity of packets, the second quantity of packets that have experienced congestion, and the quantity of packets that do not support ECN feedback, and the total counted quantity of packets equals the sum of the first quantity of packets that have experienced congestion, the first quantity of packets that have not experienced congestion, and the quantity of packets that do not support ECN feedback.

7. The method according to claim 6, wherein the determination of the second quantity of packets that have experienced congestion based on the total counted quantity of packets and the first information comprises:
determining the second quantity of packets that have experienced congestion based on the total counted quantity of packets and a second congestion ratio when the first QoS flow is transmitted at the first QoS requirement, wherein the second congestion ratio is determined based on the first information.

8. The method according to claim 6 or 7, wherein the second quantity of packets that have not experienced congestion is the maximum of a third quantity and zero, wherein the third quantity equals the difference obtained by subtracting the second quantity of packets that have experienced congestion and the quantity of packets that do not support ECN feedback from the total counted quantity of packets.

9. The method according to any one of claims 6 to 8, wherein the second packet is obtained by modifying the first quantity of packets that have experienced congestion in the first packet to the second quantity of packets that have experienced congestion, and modifying the first quantity of packets that have not experienced congestion in the first packet to the second quantity of packets that have not experienced congestion.

10. The method according to any one of claims 1 to 8, wherein the payload of the second packet is empty, the sequence number of the second packet is one greater than the sequence number of the first packet, the sender identifier and the receiver identifier in the second packet are respectively the same as the sender identifier and the receiver identifier in the first packet, the sender identifier identifies the terminal device, and the receiver identifier identifies the application server.

11. The method according to any one of claims 1 to 10, wherein the second packet is an RTPFB (real-time transport layer feedback message) packet.

12. A communication device, comprising a module configured to perform the method according to any one of claims 1 and 3 to 11.

13. A communication device, comprising: a processor configured to run a computer program or instructions to implement the method according to any one of claims 1 and 3 to 11.

14. A communication chip, wherein instructions are stored therein, and when the chip is operated on a communication device, the method according to any one of claims 1 and 3 to 11 is implemented.

15. A computer-readable storage medium, wherein the storage medium stores a computer program or instructions, and when the computer program or instructions are executed by a communication device, the method according to any one of claims 1 and 3 to 11 is implemented.

16. A computer program product comprising computer program code, wherein when the computer program code is run on a communication device, the communication device implements the method according to any one of claims 1 and 3 to 11.
